# EUROPEAN PATENT SPECIFICATION

(11) **EP 4 030 406 B1**
(45) Date of publication and mention of the grant of the patent: **25.09.2024**
(21) Application number: 19945118.8
(22) Date of filing: 12.09.2019
(51) Int. Cl.: B60W 30/095, B60W 30/18, B60W 50/14, G08G 1/16, G08G 1/09, B60W 30/08, B60W 40/02

(54) **DRIVE ASSISTANCE DEVICE, VEHICLE CONTROL DEVICE, DRIVE ASSISTANCE SYSTEM, AND DRIVE ASSISTANCE METHOD**
FAHRUNTERSTÜTZUNGSVORRICHTUNG, FAHRZEUGSTEUERUNGSVORRICHTUNG, FAHRUNTERSTÜTZUNGSSYSTEM UND FAHRUNTERSTÜTZUNGSVERFAHREN
DISPOSITIF D'AIDE À LA CONDUITE, DISPOSITIF DE COMMANDE DE VÉHICULE, SYSTÈME D'AIDE À LA CONDUITE ET PROCÉDÉ D'AIDE À LA CONDUITE

(43) Date of publication of application: 20.07.2022
(73) Proprietor: MITSUBISHI ELECTRIC CORPORATION, Chiyoda-ku Tokyo 100-8310 (JP)
(72) Inventor: TAKEHARA Takayoshi, Tokyo 100-8310 (JP); WADA Yuta, Tokyo 100-8310 (JP); UEDA Kunio, Tokyo 100-8310 (JP); HAMADA Yuji, Tokyo 100-8310 (JP)
(74) Representative: Hoffmann Eitle
(86) International application number: PCT/JP2019/035841
(87) International publication number: WO 2021/048966

(56) References cited:
- EP-A2- 1 647 448
- DE-A1- 102012 210 454
- JP-A- 2006 031 328
- JP-A- 2006 285 694
- JP-A- 2007 164 549
- JP-A- 2008 250 503
- JP-A- 2018 060 448
- JP-A- 2018 128 861
- US-A1- 2002 173 907
- US-A1- 2007 139 523
- US-B1- 10 380 897

## Description

### TECHNICAL FIELD

The present disclosure relates to a driving assist device, a vehicle control device, a driving assist system, and a driving assist method.

### BACKGROUND ART

As conventional driving assist systems, there are driving assist systems in which vehicle-to-vehicle communication (hereinafter, referred to as V2V communication) is used to obtain, from a nearby vehicle, a video that cannot be obtained by a camera of the own vehicle. By the V2V communication, a camera video from the frontmost vehicle of a tailback can be watched in a subsequent vehicle, and the location of a blind spot not visible from a preceding vehicle can be seen by using a video from a subsequent vehicle. For example, Non-Patent Document 1 describes a feature in which: a video recorded by a camera mounted in a preceding vehicle is received by a subsequent vehicle; and the driver of the subsequent vehicle is provided with a video showing a view as if the preceding vehicle has become transparent and has disappeared.

EP 1 647 448 A2 relates to a method and device for improving the view of a driver of a vehicle. The vehicle comprises an antenna, a receiving unit, and a display which displays an image taken by a camera installed on another vehicle.

US 2002/173907 A1 relates to a data communication system, method, and a mobile device which enable easy acquisition of the state of a desired position on a route to be taken by a certain mobile terminal.

DE 10 2012 210454 A1 relates to a method for providing data for an electronic horizon for a driver assistance system of a vehicle. The method comprises a step of determining a group of foreign vehicles which are in the vicinity of the vehicle.

### PROBLEMS TO BE SOLVED BY THE INVENTION

However, the driving assist systems in which V2V communication is used have the following problems. That is, positional information, operational information, videos, and the like from vehicles are directly transmitted and received between the vehicles, and thus the load of arithmetic processing is high in each of the vehicles. Therefore, in the conventional driving assist systems, it is difficult to perform driving assist flexibly adapted to a running route for and operational information about a target vehicle.

The present disclosure has been made to solve the above problems, and an object of the present disclosure is to provide a driving assist device capable of performing driving assist adapted to a running route for and operational information about a target vehicle.

In addition, another object of the present disclosure is to provide a vehicle control device and a driving assist system that include the driving assist device capable of performing driving assist adapted to a running route for and operational information about a target vehicle. Further, still another object of the present disclosure is to provide a driving assist method that makes it possible to perform driving assist adapted to a running route for and operational information about a target vehicle.

### SOLUTION TO THE PROBLEMS

The present invention is defined in the appended independent claims. Further preferred embodiments are defined in the dependent claims.

### EFFECT OF THE INVENTION

In the driving assist device and the driving assist system according to the present disclosure, the nearby vehicle located at the position at which the video to be used for the driving assist can be recorded is selected on the basis of the first vehicle information, the second vehicle information, and the running route, and the video acquired from the selected nearby vehicle is transmitted as the driving assist information to the target vehicle. Consequently, driving assist adapted to the running route for and the operational information about the target vehicle can be performed.

In the driving assist device and the driving assist system according to the present disclosure, the nearby vehicle located at the position at which the video to be used for the driving assist can be recorded is selected on the basis of the first vehicle information, the second vehicle information, and the running route, and the video acquired from the selected nearby vehicle is determined as the driving assist information. Consequently, driving assist adapted to the running route for and the operational information about the target vehicle can be performed.

In the vehicle control device according to the present disclosure, the nearby vehicle located at the position at which the video to be used for the driving assist can be recorded is selected on the basis of the first vehicle information, the second vehicle information, and the running route, and the target vehicle is controlled on the basis of the driving assist information including the video acquired from the selected nearby vehicle. Consequently, control adapted to the running route for and the operational information about the target vehicle can be performed.

In the driving assist method according to the present disclosure, the nearby vehicle located at the position at which the video to be used for the driving assist can be recorded is selected on the basis of the first vehicle information, the second vehicle information, and the running route, and the video acquired from the selected nearby vehicle is determined as the driving assist information. Consequently, driving assist adapted to the running route for and the operational information about the target vehicle can be performed.

Objects, features, aspects, and effects of the present disclosure other than those described above will become more apparent from the following detailed description with reference to the drawings.

### BRIEF DESCRIPTION OF THE DRAWINGS

[FIG. 1] FIG. 1 is a block diagram showing a configuration of a driving assist system according to embodiment 1.
[FIG. 2] FIG. 2 is a block diagram showing a configuration of an input information determination unit of a driving assist device according to embodiment 1.
[FIG. 3] FIG. 3 illustrates a configuration example of hardware of the driving assist device according to embodiment 1.
[FIG. 4] FIG. 4 is a diagram for explaining the flow of an overall process to be performed by the driving assist device according to embodiment 1.
[FIG. 5] FIG. 5 is a diagram for explaining the flow of selection processing to be performed in the driving assist device according to embodiment 1.
[FIG. 6] FIG. 6 is a diagram for explaining an example of do-not-pass warning in embodiment 1.
[FIG. 7] FIG. 7 is a diagram for explaining an example of forward collision warning in embodiment 1.
[FIG. 8] FIG. 8 is a diagram for explaining an example of right-turn assist in embodiment 1.
[FIG. 9] FIG. 9 is a diagram for explaining an example of blind spot warning in embodiment 1.
[FIG. 10] FIG. 10 is a diagram for explaining an example of collision with a pedestrian in embodiment 1.
[FIG. 11] FIG. 11 is a diagram for explaining an example of high-speed merging assist in embodiment 1.
[FIG. 12] FIG. 12 is a diagram for explaining an example of do-not-pass warning in embodiment 2.
[FIG. 13] FIG. 13 is a diagram for explaining the flow of selection processing to be performed in a driving assist device according to embodiment 2.
[FIG. 14] FIG. 14 is a diagram for explaining the flow of the selection processing to be performed in the driving assist device according to embodiment 2.
[FIG. 15] FIG. 15 is a block diagram showing a configuration of an input information determination unit of a driving assist device according to embodiment 3.
[FIG. 16] FIG. 16 is a diagram for explaining a foreseeing determination unit of the driving assist device according to embodiment 3.
[FIG. 17] FIG. 17 is a block diagram showing a configuration of an input information determination unit of a driving assist device according to embodiment 4.
[FIG. 18] FIG. 18 is a diagram for explaining a special event detection unit of the driving assist device according to embodiment 4.
[FIG. 19] FIG. 19 is a diagram for explaining the flow of selection processing to be performed in the driving assist device according to embodiment 4.
[FIG. 20] FIG. 20 is a block diagram showing a configuration of a driving assist device according to embodiment 5.
[FIG. 21] FIG. 21 is a diagram for explaining the flow of a process to be performed by a running route shape detection unit of the driving assist device according to embodiment 5.
[FIG. 22] FIG. 22 is a block diagram showing a configuration of a driving assist device according to embodiment 6.
[FIG. 23] FIG. 23 is a diagram for explaining an example of high-speed merging in embodiment 6.
[FIG. 24] FIG. 24 is a diagram for explaining an example of high-speed merging in embodiment 6.
[FIG. 25] FIG. 25 is a diagram for explaining the flow of a process to be performed by a merging detection unit of the driving assist device according to embodiment 6.
[FIG. 26] FIG. 26 is a block diagram showing a configuration of a driving assist device according to embodiment 7.
[FIG. 27] FIG. 27 is a diagram for explaining a lane detection unit of the driving assist device according to embodiment 7.
[FIG. 28] FIG. 28 is a diagram for explaining the flow of a process to be performed by the lane detection unit of the driving assist device according to embodiment 7.
[FIG. 29] FIG. 29 is a diagram for explaining the flow of a process to be performed by a vehicle group generation unit of the driving assist device according to embodiment 7.
[FIG. 30] FIG. 30 is a block diagram showing a configuration of a driving assist device according to embodiment 8.
[FIG. 31] FIG. 31 is a diagram for explaining a nearby vehicle detection unit of the driving assist device according to embodiment 8.
[FIG. 32] FIG. 32 is a diagram for explaining the flow of a process to be performed by an input information determination unit of the driving assist device according to embodiment 8.
[FIG. 33] FIG. 33 is a diagram for explaining the flow of a process to be performed by a surroundings information detection unit of the driving assist device according to embodiment 8.
[FIG. 34] FIG. 34 is a block diagram showing a configuration of a driving assist system according to embodiment 9.
[FIG. 35] FIG. 35 is a diagram for explaining the flow of an overall process to be performed by a driving assist device according to embodiment 9.

### DESCRIPTION OF EMBODIMENTS

### Embodiment 1

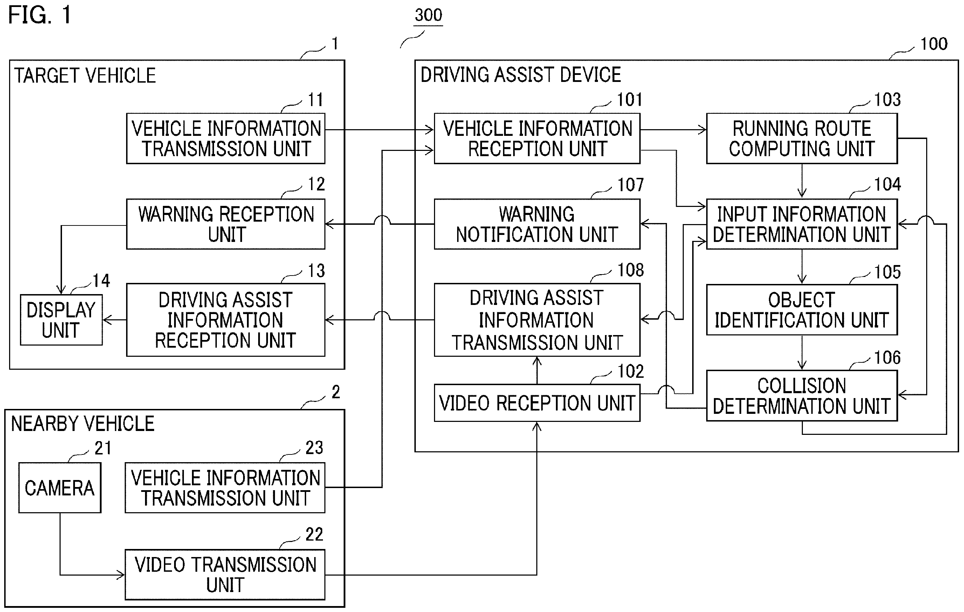

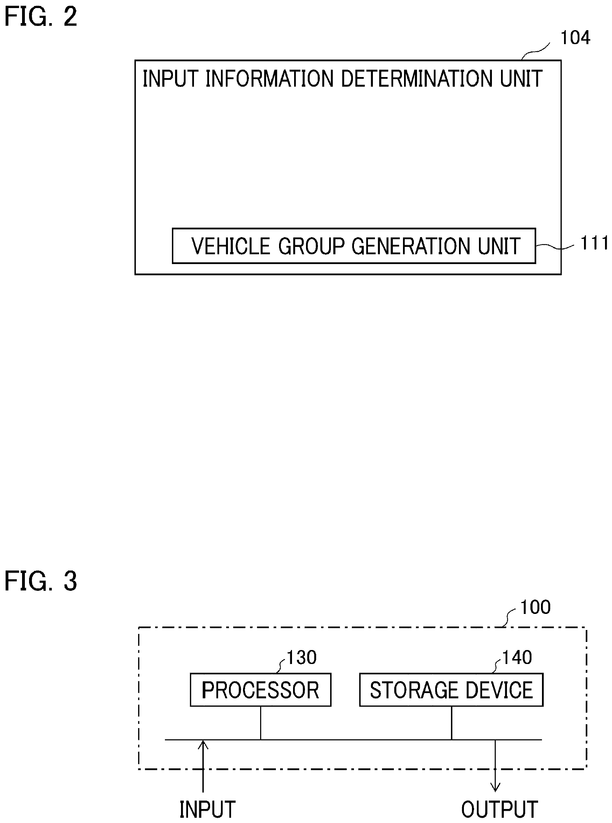

Hereinafter, a driving assist device according to embodiment 1 and a driving assist system including the same will be described with reference to drawings. FIG. 1 is a block diagram showing a configuration of the driving assist system according to embodiment 1. FIG. 2 is a block diagram showing a configuration of an input information determination unit of the driving assist device according to embodiment 1. FIG. 3 illustrates a configuration example of hardware of the driving assist device according to embodiment 1. Throughout the drawings, the same or corresponding portions in the drawings are denoted by the same reference characters.

A driving assist system 300 according to embodiment 1 includes a driving assist device 100 configured to communicate with a target vehicle 1 and each of nearby vehicles 2 running near the target vehicle 1 and to perform driving assist on the target vehicle 1. The driving assist system 300 further includes the target vehicle 1 and the nearby vehicle 2. The target vehicle 1 is provided with: a vehicle information transmission unit 11 which is a first vehicle information transmission unit; a warning reception unit 12; a driving assist information reception unit 13; and a display unit 14. Further, the nearby vehicle 2 is provided with: a camera 21; a video transmission unit 22; and a vehicle information transmission unit 23 which is a second vehicle information transmission unit.

Although not shown, a camera and a video transmission unit are provided in the target vehicle 1 in the same manner as in the nearby vehicle 2, and a warning reception unit, a driving assist information reception unit, and a display unit are provided also in the nearby vehicle 2 in the same manner as in the target vehicle 1. That is, the target vehicle 1 and the nearby vehicle 2 are interchangeable, and the nearby vehicle 2 can also be set as a target for driving assist. In addition, although one nearby vehicle 2 is shown in FIG. 1, the number of the nearby vehicles 2 is not particularly limited and may be more than one depending on the situation of the road.

The vehicle information transmission unit 11 of the target vehicle 1 transmits first vehicle information including positional information and operational information about the target vehicle 1 to the driving assist device 100. The vehicle information transmission unit 11 acquires the positional information from the global positioning system (GPS) or the like. The first vehicle information includes some or all of latitude information, longitude information, speed information, acceleration information, azimuth information, blinker information, steering wheel operational information, brake control information, and the like about the target vehicle 1.

The warning reception unit 12 receives a warning message transmitted from a warning notification unit 107 of the driving assist device 100. The driving assist information reception unit 13 which is a reception unit receives driving assist information transmitted from a driving assist information transmission unit 108 of the driving assist device 100. The display unit 14 displays: a video included in the driving assist information; the warning message; and the like.

The vehicle information transmission unit 23 of the nearby vehicle 2 transmits second vehicle information including positional information and operational information about the nearby vehicle 2 to the driving assist device 100. The second vehicle information includes latitude information, longitude information, speed information, acceleration information, azimuth information, and the like about the nearby vehicle 2. The video transmission unit 22 transmits a video recorded by the camera 21 of the nearby vehicle 2 to the driving assist device 100. The nearby vehicle 2 is mounted with a plurality of the cameras 21 which record videos of at least predetermined ranges of regions in front of and behind the nearby vehicle 2.

The driving assist device 100 includes: a vehicle information reception unit 101 and a video reception unit 102 which are reception units; a running route computing unit 103; an input information determination unit 104; an object identification unit 105; a collision determination unit 106; the warning notification unit 107; and the driving assist information transmission unit 108 which is a transmission unit.

The vehicle information reception unit 101 receives the first vehicle information transmitted from the vehicle information transmission unit 11 and the second vehicle information transmitted from the vehicle information transmission unit 23. The video reception unit 102 receives the video recorded by the camera 21 of the nearby vehicle 2 and transmitted from the video transmission unit 22 thereof. The first vehicle information, the second vehicle information, and the video are recorded and saved in a vehicle information list (not shown) of the driving assist device 100. The running route computing unit 103 obtains a running route for the target vehicle 1 on the basis of the first vehicle information.

The input information determination unit 104 determines driving assist information on the basis of at least the first vehicle information, the second vehicle information, and the running route obtained by the running route computing unit 103. The input information determination unit 104 selects any of the nearby vehicles 2 that is located at a position at which a video to be used for the driving assist can be recorded (this process is referred to as selection processing), and determines the video acquired from the selected nearby vehicle 2 as the driving assist information.

The video to be used for the driving assist refers to a video that cannot be recorded by the camera of the target vehicle 1. Specifically, the video is any of: a video of a region further in front of a front vehicle located in front of the target vehicle 1; a video of a region further behind a rear vehicle located behind the target vehicle 1; a video of a region which is a blind spot not visible at the time of a right/left turn of the target vehicle 1; and the like. In many cases, objects (vehicles, two-wheeled vehicles, pedestrians, or the like) existing in these regions cannot be captured by the camera of the target vehicle 1 and are difficult for the driver of the target vehicle 1 to notice.

The object identification unit 105 identifies, on the basis of the video acquired from the nearby vehicle 2 and the running route obtained by the running route computing unit 103, any of objects that exists on the running route. The objects to be identified by the object identification unit 105 include: a nearby vehicle 2 running on the running route; an oncoming vehicle running on a lane opposite to the running route; an object and a pedestrian existing around the running route; and the like.

Information about the object identified by the object identification unit 105 is inputted to the collision determination unit 106. The collision determination unit 106 determines, on the basis of the first vehicle information, the second vehicle information, the video acquired from the nearby vehicle 2, and the running route, whether or not there is a possibility of a collision between the target vehicle 1 and the object, and a type of the collision. The result of the determination by the collision determination unit 106 is inputted to the input information determination unit 104. If the collision determination unit 106 determines that there is a possibility of a collision with the object, the input information determination unit 104 performs selection processing on the basis of the type of the collision.

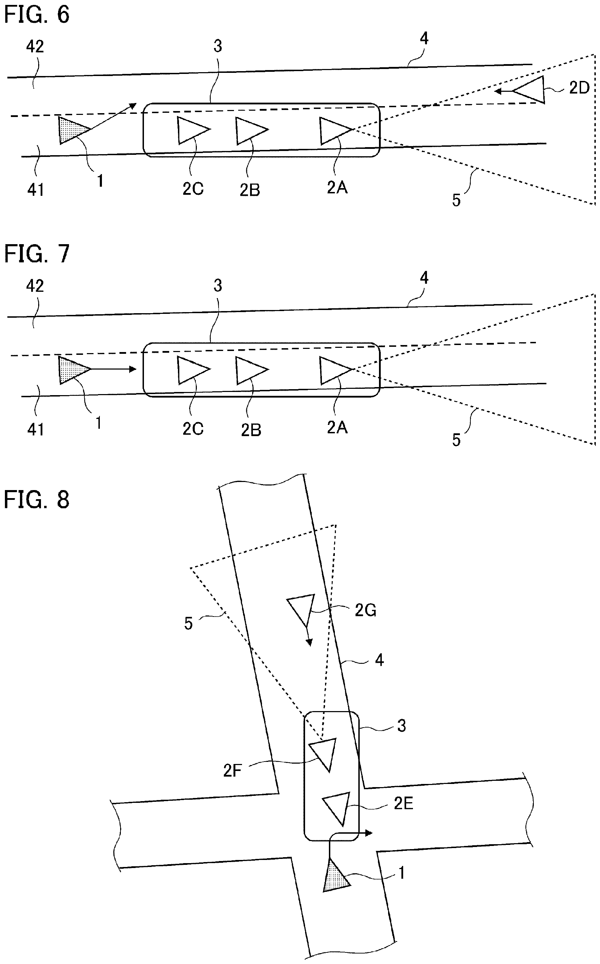

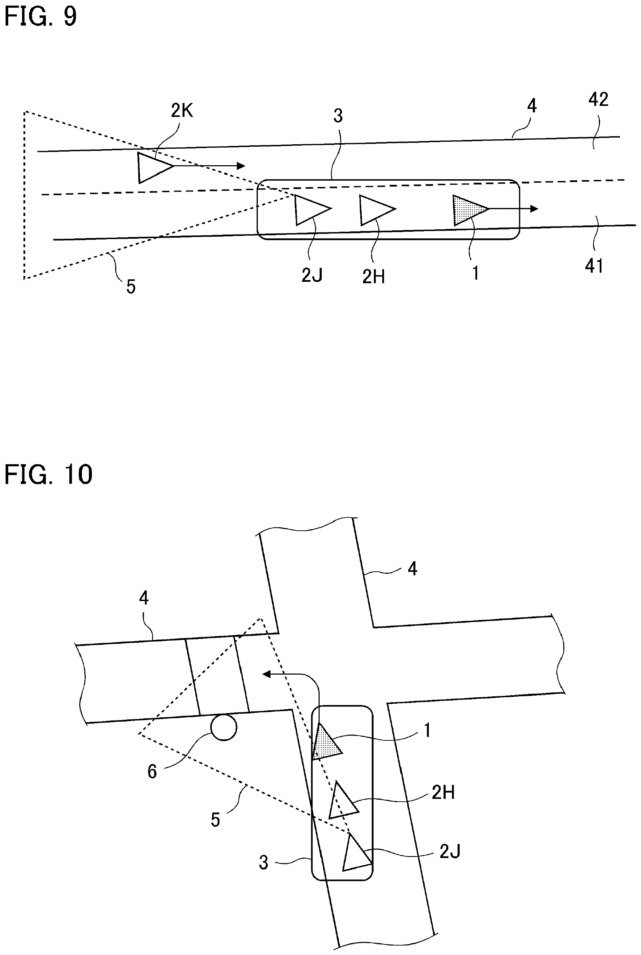

In addition, as shown in FIG. 2, the input information determination unit 104 includes a vehicle group generation unit 111. The vehicle group generation unit 111 generates a vehicle group 3 including one or more nearby vehicles 2 running in front of or behind the target vehicle 1, on the basis of the first vehicle information, the second vehicle information, and the running route. The vehicle group 3 may include the target vehicle 1 (see FIG. 10) or does not have to include the target vehicle 1 (see FIG. 6). There is also a case where the vehicle group 3 includes oncoming vehicles 2E and 2F (see FIG. 8) at a crossing or the like.

In the selection processing, the input information determination unit 104 performs the selection from among the nearby vehicles 2 included in the vehicle group 3 generated by the vehicle group generation unit 111. In embodiment 1, if the collision determination unit 106 determines that there is a possibility of a collision with the object, the vehicle group generation unit 111 generates a vehicle group 3 on the basis of the type of the collision.

If the collision determination unit 106 determines that there is a possibility of a collision with the object, the warning notification unit 107 transmits a warning message to the target vehicle 1. The driving assist information transmission unit 108 transmits the driving assist information determined by the input information determination unit 104 to the target vehicle 1. A video included in the transmitted driving assist information is displayed on the display unit 14 of the target vehicle 1.

It is noted that the driving assist information may include not only the video acquired from the nearby vehicle 2 but also another information about the running route. For example, the driving assist information may include: information about an object detected by a sensor (not shown) of the nearby vehicle 2 (the position of the object, the distance to the object, or the time to be taken before collision therewith); information that is about an accident, street closure, or the like on the running route and that has been acquired from outside by the driving assist device 100; and the like.

The driving assist device 100 is, for example, a server installed at a base station. Specifically, a mobile edge computing (MEC) server or the like is used. The MEC server is provided on the edge side of the base station for the long term evolution (LTE), 5G networks, or the like and achieves a lower delay than Internet servers.

A configuration example of hardware of the driving assist device 100 will be described with reference to FIG. 3. The driving assist device 100 can be composed of a processor 130 and a storage device 140. Each of the functions of the running route computing unit 103, the input information determination unit 104, the object identification unit 105, the collision determination unit 106, and the like is performed by a processing circuit. The processing circuit may be the processor 130 to execute a program stored in the storage device 140, or may be dedicated hardware.

The storage device 140 includes a volatile storage device such as a random access memory, and a nonvolatile auxiliary storage device such as a flash memory. Alternatively, the storage device 140 may include, as the auxiliary storage device, a hard disk instead of a flash memory. The processor 130 executes a program inputted from the storage device 140. In this case, the program is inputted from the auxiliary storage device via the volatile storage device to the processor 130. Further, the processor 130 may output data such as a calculation result to the volatile storage device of the storage device 140 or may save the data via the volatile storage device to the auxiliary storage device.

In addition, each of the warning reception unit 12 and the driving assist information reception unit 13 of the target vehicle 1, the vehicle information reception unit 101 and the video reception unit 102 of the driving assist device 100, and the like is implemented by a receiver. Each of the vehicle information transmission units 11 and 23, the warning notification unit 107, the driving assist information transmission unit 108, and the like is implemented by a transmitter. The display unit 14 is implemented by a display such as a liquid-crystal display.

A driving assist method to be performed by the driving assist device 100 includes the following three steps. First, in a first step, first vehicle information including positional information and operational information about the target vehicle 1, second vehicle information including positional information and operational information about each of nearby vehicles 2, and a video recorded by the camera 21 of the nearby vehicle 2, are acquired. Then, in a second step, a running route for the target vehicle 1 is obtained on the basis of the first vehicle information.

Further, in a third step, driving assist information is determined on the basis of at least the first vehicle information, the second vehicle information, and the running route. In the third step, any of the nearby vehicles 2 that is located at a position at which a video to be used for the driving assist can be recorded is selected, and the video acquired from the selected nearby vehicle 2 is determined as the driving assist information.

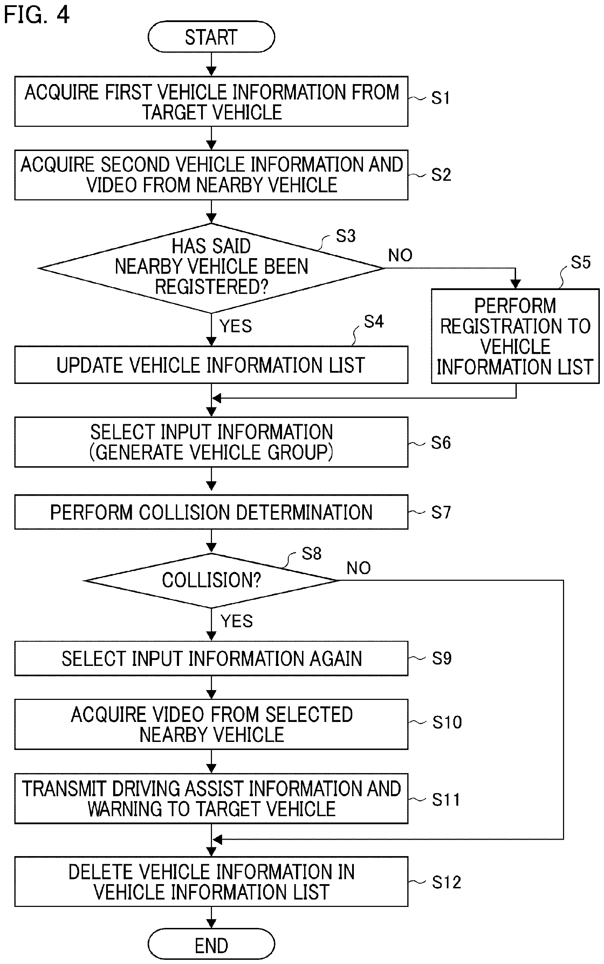

The flow of an overall process to be performed by the driving assist device 100 will be described with reference to the flowchart in FIG. 4. First, in step S1, first vehicle information is acquired from the target vehicle 1. Subsequently, in step S2, second vehicle information and a video are acquired from each of nearby vehicles 2. Then, determination as to whether or not the nearby vehicle 2 has already been registered, is made in step S3. Specifically, the vehicle information list is searched for the second vehicle information acquired in step S2, and association with the second vehicle information is performed.

If determination that the nearby vehicle 2 has been registered is made in step S3 (Yes), the vehicle information list is updated in step S4. Meanwhile, if determination that the nearby vehicle 2 has not been registered is made in step S3 (No), the second vehicle information about the nearby vehicle 2 is registered to the vehicle information list in step S5.

Subsequently, in step S6, the input information determination unit 104 selects information to be inputted to the target vehicle 1. The vehicle group generation unit 111 generates a vehicle group 3 on the basis of the first vehicle information, the second vehicle information, and the running route . In a method for generating the vehicle group 3, if the distance between vehicles is equal to or smaller than a preset threshold value (for example, 10 m), the vehicles are regarded as one vehicle group 3.

Step S6 may merely involve generation of the vehicle group 3. Alternatively, if an object exists in a video acquired from any of the nearby vehicles 2 included in the vehicle group 3, step S6 may also involve selection of the video. However, the video selected in step S6 is not a video determined as the driving assist information.

Subsequently, in step S7, collision determination is performed. The collision determination unit 106 determines whether or not there is a possibility of a collision between the target vehicle 1 and the object identified by the object identification unit 105, and a type of the collision. Specifically, if the time to be taken before the collision between the target vehicle 1 and the object is equal to or smaller than a preset threshold value (for example, 5 seconds), the collision determination unit 106 determines that there is a possibility of a collision therebetween.

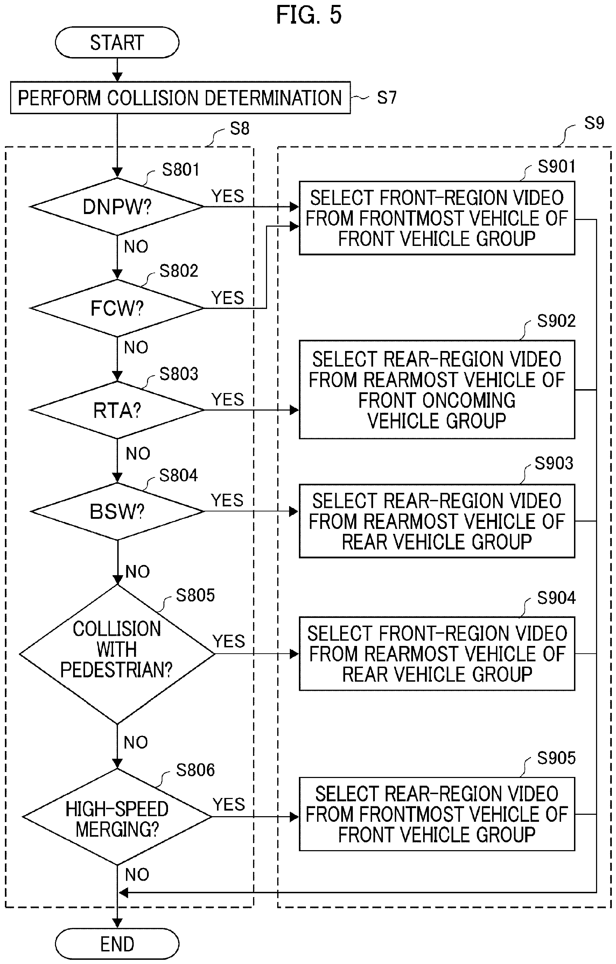

If the collision determination unit 106 determines that no collision is to occur in step S8 (No), the vehicle information registered in the vehicle information list is deleted in step S12, and the process is ended. Meanwhile, if the collision determination unit 106 determines that there is a possibility of a collision in step S8 (Yes), information to be inputted to the target vehicle 1 is selected again in selection processing in step S9. Processing in each of step S8 and step S9 will be described in detail with reference to the flowchart in FIG. 5.

Then, in step S10, a video is acquired from the nearby vehicle 2 selected in step S9. Subsequently, in step S11, a warning message and the driving assist information which includes the video are transmitted to the target vehicle 1. Finally, in step S12, the vehicle information in the vehicle information list is deleted, and the process is ended.

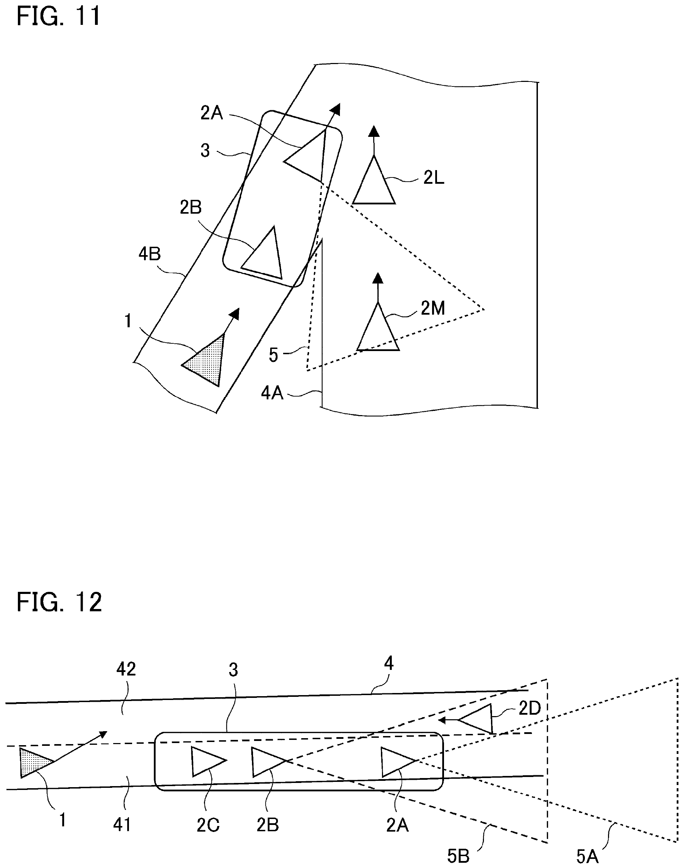

Next, the collision determination in step S8 and the selection processing in step S9 will be described in detail with reference to the flowchart in FIG. 5, and FIG. 6 to FIG. 11. FIG. 6 is a diagram for explaining do-not-pass warning (hereinafter, referred to as DNPW) . FIG. 7 is a diagram for explaining forward collision warning (hereinafter, referred to as FCW). FIG. 8 is a diagram for explaining right-turn assist (hereinafter, referred to as RTA). FIG. 9 is a diagram for explaining blind spot warning (hereinafter, referred to as BSW). FIG. 10 is a diagram for explaining a warning about collision with a pedestrian. FIG. 11 is a diagram for explaining high-speed merging assist.

In FIG. 6 to FIG. 11, the target vehicle 1 and nearby vehicles 2 (including front vehicles 2A, 2B, and 2C, oncoming vehicles 2D, 2E, 2F, and 2G, rear vehicles 2H, 2J, and 2K, and vehicles 2L and 2M) running on a road 4 are indicated by triangles. Patterns of the vehicle group 3 shown in FIG. 6 to FIG. 11 are merely examples, and the pattern of the vehicle group 3 is not limited thereto.

When the collision determination starts to be performed in step S7 in FIG. 5, a type of the collision is determined in step S801 to step S806 of step S8. Further, selection processing based on the type of the collision is performed in step S901 to step S905 of step S9.

First, the collision determination unit 106 determines whether or not the type of the collision is DNPW in step S801. If the collision determination unit 106 determines that the type of the collision is DNPW (Yes), the input information determination unit 104 selects a front-region video from the frontmost vehicle of a front vehicle group in step S901.

In an example of DNPW shown in FIG. 6, the target vehicle 1 running in a lane 41 on the road 4 is attempting to overtake the front vehicles 2A, 2B, and 2C. However, a vehicle group 3 located immediately in front blocks the field of view, and thus the driver of the target vehicle 1 cannot notice the oncoming vehicle 2D running on an opposite lane 42. Meanwhile, the oncoming vehicle 2D exists within a capturing range 5 of a front camera of the front vehicle 2A. Therefore, the vehicle group generation unit 111 generates a vehicle group 3 including the front vehicles 2A, 2B, and 2C located in front of the target vehicle 1, and the input information determination unit 104 selects a front-region video from the front vehicle 2A which is the frontmost vehicle of the front vehicle group 3.

If the collision determination unit 106 determines that the type of the collision is not DNPW in step S801 (No), the collision determination unit 106 determines whether or not the type of the collision is FCW in step S802. If the collision determination unit 106 determines that the type of the collision is FCW (Yes), the input information determination unit 104 selects a front-region video from the frontmost vehicle of a front vehicle group in step S901.

In an example of FCW shown in FIG. 7, the front vehicle group 3 running on the same lane 41 blocks the field of view, and thus the driver of the target vehicle 1 cannot obtain the view in front of the front vehicle group 3. Therefore, the vehicle group generation unit 111 generates a vehicle group 3 including the front vehicles 2A, 2B, and 2C located in front of the target vehicle 1, and the input information determination unit 104 selects a front-region video from the front vehicle 2A which is the frontmost vehicle of the front vehicle group 3.

If the collision determination unit 106 determines that the type of the collision is not FCW in step S802 (No), the collision determination unit 106 determines whether or not the type of the collision is RTA in step S803. If the collision determination unit 106 determines that the type of the collision is RTA (Yes), the input information determination unit 104 selects a rear-region video from the rearmost vehicle of a front oncoming vehicle group in step S902.

In an example of RTA shown in FIG. 8, a vehicle group 3 including the front oncoming vehicles 2E and 2F blocks the field of view, and thus the driver of the target vehicle 1 cannot notice the oncoming vehicle 2G. Meanwhile, the oncoming vehicle 2G exists within a capturing range 5 of a rear camera of the front oncoming vehicle 2F. Therefore, the vehicle group generation unit 111 generates a vehicle group 3 including the oncoming vehicles 2E and 2F located in front of the target vehicle 1, and the input information determination unit 104 selects a rear-region video from the oncoming vehicle 2F which is the rearmost vehicle of the front oncoming vehicle group 3.

If the collision determination unit 106 determines that the type of the collision is not RTA in step S803 (No), the collision determination unit 106 determines whether or not the type of the collision is BSW in step S804. If the collision determination unit 106 determines that the type of the collision is BSW (Yes), the input information determination unit 104 selects a rear-region video from the rearmost vehicle of a rear vehicle group in step S903.

In an example of BSW shown in FIG. 9, it is difficult for the driver of the target vehicle 1 running in the lane 41 to notice the rear vehicle 2K that is running in the opposite lane 42 and that is attempting to overtake the vehicle group 3. Meanwhile, the rear vehicle 2K exists within a capturing range 5 of a rear camera of the rear vehicle 2J. Therefore, the vehicle group generation unit 111 generates a vehicle group 3 including the target vehicle 1 and the rear vehicles 2H and 2J located behind the target vehicle 1, and the input information determination unit 104 selects a rear-region video from the rear vehicle 2J which is the rearmost vehicle of the rear vehicle group 3.

If the collision determination unit 106 determines that the type of the collision is not BSW in step S804 (No), the collision determination unit 106 determines whether or not the type of the collision is collision with a pedestrian in step S805. If the collision determination unit 106 determines that the type of the collision is collision with a pedestrian (Yes), the input information determination unit 104 selects a front-region video from the rearmost vehicle of a rear vehicle group in step S904.

In an example shown in FIG. 10, it is difficult for the driver of the target vehicle 1 to notice a pedestrian 6 on a sidewalk. Meanwhile, the pedestrian 6 exists within a capturing range 5 of a front camera of the rear vehicle 2J. Therefore, the vehicle group generation unit 111 generates a vehicle group 3 including the target vehicle 1 and the rear vehicles 2H and 2J located behind the target vehicle 1, and the input information determination unit 104 selects a front-region video from the rear vehicle 2J which is the rearmost vehicle of the rear vehicle group 3.

If the collision determination unit 106 determines that the type of the collision is not collision with a pedestrian in step S805 (No), the collision determination unit 106 determines whether or not the type of the collision is high-speed merging in step S806. If the collision determination unit 106 determines that the type of the collision is high-speed merging (Yes), the input information determination unit 104 selects a rear-region video from the frontmost vehicle of a front vehicle group in step S905.

In an example of high-speed merging shown in FIG. 11, the vehicles 2L and 2M are running in a main lane 4A of an expressway, and the target vehicle 1 running in a merging lane 4B is approaching a merging point. A vehicle group 3 including the front vehicles 2A and 2B, a wall of the main lane 4A, or the like blocks the field of view, and thus it is difficult for the driver of the target vehicle 1 to grasp the situation of the main lane 4A onto which merging is to be performed.

Meanwhile, the vehicle 2M running in the main lane 4A and approaching the merging point exists within a capturing range 5 of a rear camera of the front vehicle 2A. Therefore, the vehicle group generation unit 111 generates a vehicle group 3 including the front vehicles 2A and 2B located in front of the target vehicle 1, and the input information determination unit 104 selects a rear-region video from the front vehicle 2A which is the frontmost vehicle of the front vehicle group 3. If the collision determination unit 106 determines that the type of the collision is not high-speed merging in step S806 (No), the collision determination is ended.

The driving assist device 100 and the driving assist system 300 according to embodiment 1 are configured such that: the nearby vehicle 2 located at the position at which the video to be used for the driving assist can be recorded is selected on the basis of the first vehicle information, the second vehicle information, and the running route; and the video acquired from the selected nearby vehicle 2 is transmitted as the driving assist information to the target vehicle 1. Consequently, driving assist flexibly adapted to, for example, the running route for and the operational information about the target vehicle 1 can be performed. Further, since the video corresponding to the type of the collision is transmitted as the driving assist information to the target vehicle 1, driving assist more flexibly adapted to, for example, the running route for and the operational information about the target vehicle 1 can be performed.

In addition, in the driving assist method according to embodiment 1, the nearby vehicle 2 located at the position at which the video to be used for the driving assist can be recorded is selected on the basis of the first vehicle information, the second vehicle information, and the running route, and the video acquired from the selected nearby vehicle 2 is determined as the driving assist information. Consequently, driving assist flexibly adapted to, for example, the running route for and the operational information about the target vehicle 1 can be performed.

### Embodiment 2

The driving assist device 100 according to the above embodiment 1 performs selection processing in which the frontmost vehicle of a front vehicle group located in front of the target vehicle 1, the rearmost vehicle of an oncoming vehicle group opposing the target vehicle 1, or the rearmost vehicle of a rear vehicle group located behind the target vehicle 1, is selected. However, there is a case where no object (an oncoming vehicle, a pedestrian, or the like) exists in any of the videos acquired from these nearby vehicles 2.

Considering this, if no object exists in the video acquired from the selected nearby vehicle 2, the input information determination unit 104 in embodiment 2 acquires a video with the object existing therein from another nearby vehicle 2 included in the vehicle group 3, and determines the video with the object existing therein as the driving assist information. It is noted that the overall configuration of a driving assist system according to embodiment 2 is the same as that in the above embodiment 1, and thus description thereof will be omitted (see FIG. 1).

FIG. 12 is a diagram for explaining an example of DNPW in embodiment 2. In the example shown in FIG. 12, the target vehicle 1 running in the lane 41 of the road 4 is attempting to overtake the front vehicles 2A, 2B, and 2C. However, the vehicle group 3 located immediately in front blocks the field of view, and thus the driver of the target vehicle 1 cannot notice the oncoming vehicle 2D running in the opposite lane 42.

Further, the oncoming vehicle 2D does not exist within the capturing range 5A of the front camera of the front vehicle 2A which is the frontmost vehicle of the vehicle group 3, and thus is not captured by the camera of the front vehicle 2A. Thus, it is conceivable that, if the video acquired from the front vehicle 2A is transmitted as the driving assist information to the target vehicle 1, the driver of the target vehicle 1 could determine that no oncoming vehicle 2D exists and could perform overtaking.

In order to avoid such a situation, if no oncoming vehicle 2D exists in the video acquired from the front vehicle 2A selected in the selection processing, the input information determination unit 104 of the driving assist device according to embodiment 2 selects a video with the oncoming vehicle 2D existing therein from among front-region videos recorded in the other front vehicle 2B (or 2C) included in the vehicle group 3. In the example shown in FIG. 12, the oncoming vehicle 2D exists within a capturing range 5B of a front camera of the front vehicle 2B, and thus a front-region video from the front vehicle 2B is transmitted as the driving assist information to the target vehicle 1.

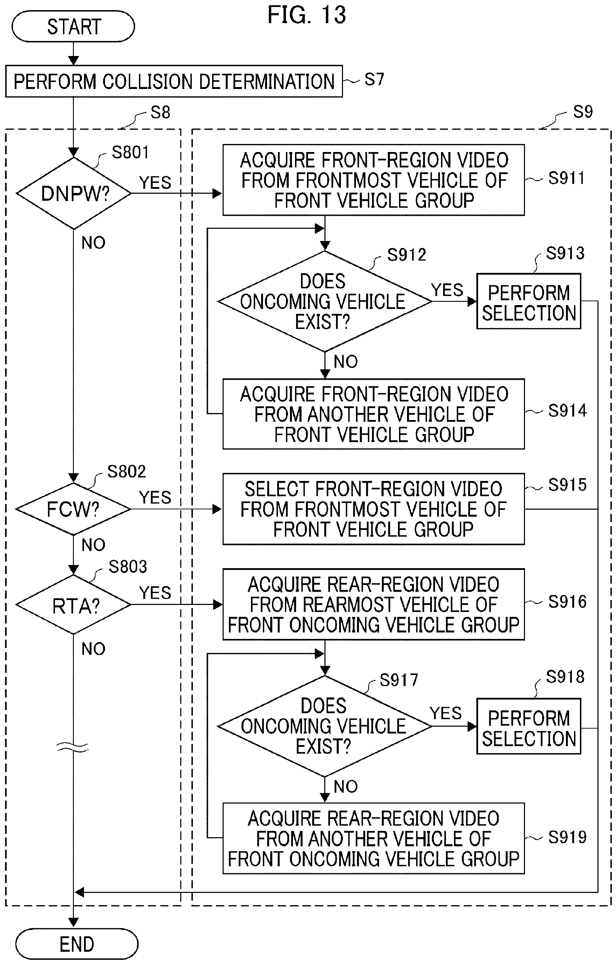

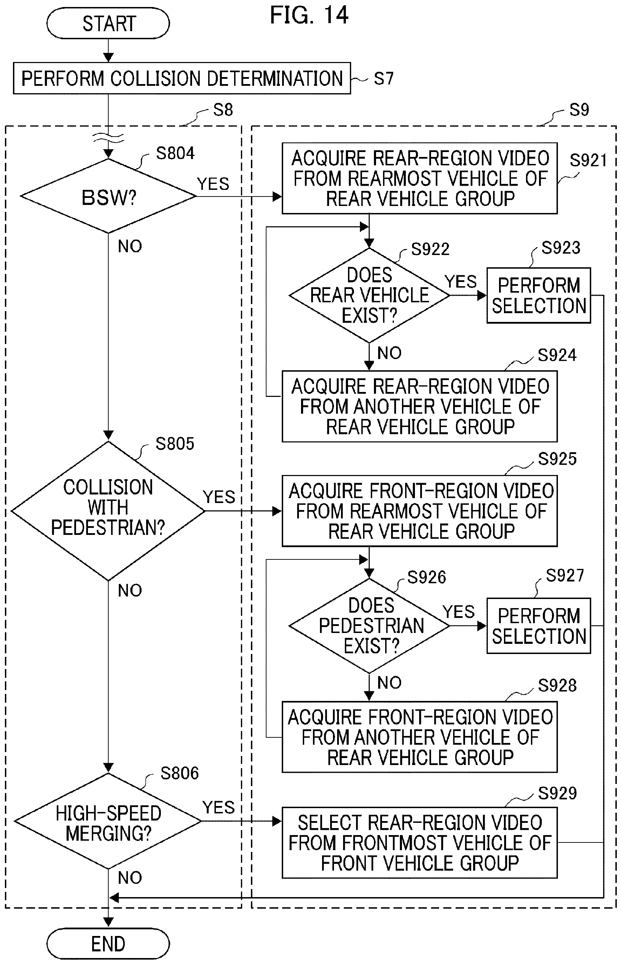

The flow of an overall process to be performed by the driving assist device according to embodiment 2 is the same as that in the above embodiment 1, and thus description thereof will be omitted (see FIG. 4). Here, collision determination and selection processing in embodiment 2 will be described in detail with reference to the flowcharts in FIG. 13 and FIG. 14. It is noted that step S803 in FIG. 13 and step S804 in FIG. 14 are consecutively performed.

When the collision determination starts to be performed in step S7 in FIG. 13, a type of the collision is determined in step S801 of step S8 in FIG. 13 to step S806 of step S8 in FIG. 14. Further, selection processing based on the type of the collision is performed in step S911 of step S9 in FIG. 13 to step S929 of step S9 in FIG. 14.

First, the collision determination unit 106 determines whether or not the type of the collision is DNPW in step S801. If the collision determination unit 106 determines that the type of the collision is DNPW (Yes), in step S911, the vehicle group generation unit 111 generates a front vehicle group located in front of the target vehicle 1, and the input information determination unit 104 acquires a front-region video from the frontmost vehicle of the front vehicle group.

Then, in step S912, the input information determination unit 104 determines whether or not the oncoming vehicle exists in the video acquired in step S911. If the input information determination unit 104 determines that the oncoming vehicle exists (Yes), the input information determination unit 104 selects the video in step S913. Meanwhile, if the input information determination unit 104 determines that no oncoming vehicle exists in step S912 (No), the input information determination unit 104 acquires a front-region video from another vehicle of the front vehicle group in step S914. Thereafter, the process returns to step S912 in which the input information determination unit 104 determines whether or not the oncoming vehicle exists in the video acquired in step S914. If the input information determination unit 104 determines that the oncoming vehicle exists (Yes), the input information determination unit 104 selects the video in step S913. These steps are repeated until a video with the oncoming vehicle existing therein is found.

If the collision determination unit 106 determines that the type of the collision is not DNPW in step S801 (No), the collision determination unit 106 determines whether or not the type of the collision is FCW in step S802. If the collision determination unit 106 determines that the type of the collision is FCW (Yes), in step S915, the vehicle group generation unit 111 generates a front vehicle group located in front of the target vehicle 1, and the input information determination unit 104 selects a front-region video from the frontmost vehicle of the front vehicle group.

In the case of FCW, the vehicle group 3 located immediately in front of the target vehicle 1 blocks the field of view, and thus the driver cannot obtain the view in front of the front vehicle group 3 (see FIG. 7). Therefore, the input information determination unit 104 selects the front-region video from the frontmost vehicle of the front vehicle group regardless of whether or not an oncoming vehicle exists.

If the collision determination unit 106 determines that the type of the collision is not FCW in step S802 (No), the collision determination unit 106 determines whether or not the type of the collision is RTA in step S803. If the collision determination unit 106 determines that the type of the collision is RTA (Yes), in step S916, the vehicle group generation unit 111 generates an oncoming vehicle group located in front of the target vehicle 1, and the input information determination unit 104 acquires a rear-region video from the rearmost vehicle of the front oncoming vehicle group.

Then, in step S917, the input information determination unit 104 determines whether or not the oncoming vehicle exists in the video acquired in step S916. If the input information determination unit 104 determines that the oncoming vehicle exists (Yes), the input information determination unit 104 selects the video in step S918. Meanwhile, if the input information determination unit 104 determines that no oncoming vehicle exists in step S917 (No), the input information determination unit 104 acquires a rear-region video from another vehicle of the front oncoming vehicle group in step S919. Thereafter, the process returns to step S917 in which the input information determination unit 104 determines whether or not the oncoming vehicle exists in the video acquired in step S919. These steps are repeated until a video with the oncoming vehicle existing therein is found.

If the collision determination unit 106 determines that the type of the collision is not RTA in step S803 (No), the collision determination unit 106 determines whether or not the type of the collision is BSW in step S804 in FIG. 14. If the collision determination unit 106 determines that the type of the collision is BSW (Yes), in step S921, the vehicle group generation unit 111 generates a rear vehicle group located behind the target vehicle 1, and the input information determination unit 104 acquires a rear-region video from the rearmost vehicle of the rear vehicle group.

Then, in step S922, the input information determination unit 104 determines whether or not the rear vehicle exists in the video acquired in step S921. If the input information determination unit 104 determines that the rear vehicle exists (Yes), the input information determination unit 104 selects the video in step S923. Meanwhile, if the input information determination unit 104 determines that no rear vehicle exists in step S922 (No), the input information determination unit 104 acquires a rear-region video from another vehicle of the rear vehicle group in step S924. Subsequently, the process returns to step S922 in which the input information determination unit 104 determines whether or not the rear vehicle exists in the video acquired in step S924. These steps are repeated until a video with the rear vehicle existing therein is found.

If the collision determination unit 106 determines that the type of the collision is not BSW in step S804 (No), the collision determination unit 106 determines whether or not the type of the collision is collision with a pedestrian in step S805. If the collision determination unit 106 determines that the type of the collision is collision with a pedestrian (Yes), in step S925, the vehicle group generation unit 111 generates a rear vehicle group located behind the target vehicle 1, and the input information determination unit 104 acquires a front-region video from the rearmost vehicle of the rear vehicle group.

Then, in step S926, the input information determination unit 104 determines whether or not the pedestrian exists in the video acquired in step S925. If the input information determination unit 104 determines that the pedestrian exists (Yes), the input information determination unit 104 selects the video in step S927. If the input information determination unit 104 determines that no pedestrian exists in step S926 (No), the input information determination unit 104 acquires a front-region video from another vehicle of the rear vehicle group in step S928. Subsequently, the process returns to step S926 in which the input information determination unit 104 determines whether or not the pedestrian exists in the video acquired in step S928. These steps are repeated until a video with the pedestrian existing therein is found.

If the collision determination unit 106 determines that the type of the collision is not collision with a pedestrian in step S805 (No), the collision determination unit 106 determines whether or not the type of the collision is high-speed merging in step S806. If the collision determination unit 106 determines that the type of the collision is high-speed merging (Yes), in step S929, the vehicle group generation unit 111 generates a front vehicle group located in front of the target vehicle 1, and the input information determination unit 104 selects a rear-region video from the frontmost vehicle of the front vehicle group.

In the case of high-speed merging, the front vehicle group, the wall of the main lane, or the like blocks the field of view, and thus it is difficult for the driver of the target vehicle 1 to grasp the situation of the main lane onto which merging is to be performed (see FIG. 11). Therefore, the input information determination unit 104 selects the rear-region video from the frontmost vehicle of the front vehicle group regardless of whether or not a rear vehicle exists. If the collision determination unit 106 determines that the type of the collision is not high-speed merging in step S806 (No), the collision determination is ended.

Embodiment 2 achieves the following effect in addition to the same effects as those in the above embodiment 1. That is, a check is performed as to whether or not the object exists in a video selected correspondingly to the type of the collision, and a video with the object existing therein is transmitted as the driving assist information, whereby driving assist even more flexibly adapted to, for example, the running route for and the operational information about the target vehicle 1 can be performed.

### Embodiment 3

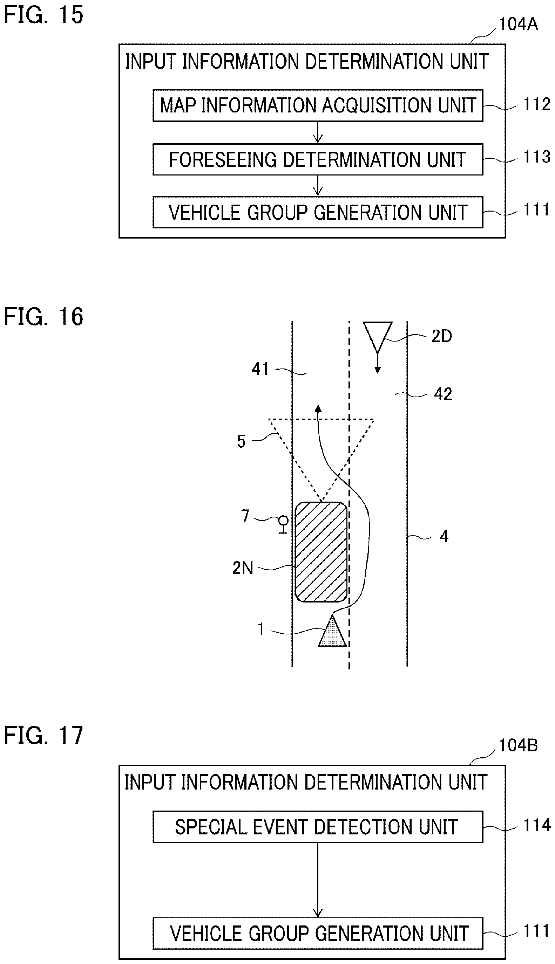

FIG. 15 is a block diagram showing a configuration of an input information determination unit of a driving assist device according to embodiment 3. An input information determination unit 104A in embodiment 3 includes a map information acquisition unit 112 and a foreseeing determination unit 113 in addition to the vehicle group generation unit 111. It is noted that the overall configuration of a driving assist system according to embodiment 3 and the flow of an overall process to be performed by the driving assist device are the same as those in the above embodiment 1, and thus description thereof will be omitted (see FIG. 1 and FIG. 4).

The map information acquisition unit 112 acquires map information including a running route for the target vehicle 1 obtained by the running route computing unit 103. The foreseeing determination unit 113 predicts a change in the running route due to a behavior of a nearby vehicle 2 and obtains a new running route, on the basis of the running route, the map information, the first vehicle information, and the second vehicle information. The vehicle group generation unit 111 generates a vehicle group 3 on the basis of the new running route obtained by the foreseeing determination unit 113. The input information determination unit 104A performs selection processing on the basis of the new running route obtained by the foreseeing determination unit 113.

The foreseeing determination unit 113 will be described with reference to FIG. 16. An example shown in FIG. 16 illustrates a road 4 having a single lane on each side thereof. On the road 4, a bus 2N as a nearby vehicle is running in front of the target vehicle 1 running in a lane 41. Normally, the target vehicle 1 runs in the lane 41 while following the bus 2N. However, when the bus 2N is stopped at a bus stop 7, the target vehicle 1 may overtake the bus 2N. In this case, the target vehicle 1 runs on a new running route different from the normal route.

As in this example, the running route of the target vehicle 1 may be changed owing to the behavior of the nearby vehicle 2 (here, the bus 2N) . Other examples include: an example in which a nearby vehicle 2 running in front is overtaken when the nearby vehicle 2 is stopped to enter a parking lot; an example in which a tailback caused by a nearby vehicle 2 attempting to enter a parking lot is overtaken; and the like. Such changes in the running route due to the behaviors of nearby vehicles 2 are likely to occur at specific locations such as bus stops and parking lots, and thus can be predicted on the basis of map information.

In the example shown in FIG. 16, the foreseeing determination unit 113 detects, on the basis of the first vehicle information, the second vehicle information, the video, the running route, the map information, and the like, that: the nearby vehicle 2 running in front of the target vehicle 1 is the bus 2N; and the bus 2N is running before the bus stop 7. It is noted that a rule that a bus is stopped at a bus stop, and a rule that there is the possibility that the target vehicle running behind a bus overtakes the bus when the bus is stopped at a bus stop, are preset for the foreseeing determination unit 113.

By setting such rules, the foreseeing determination unit 113 can make determination as to occurrence of a change in the running route of the target vehicle 1 running behind the bus 2N, when the bus 2N is about to reach the bus stop 7. If the foreseeing determination unit 113 determines that a change in the running route is to occur, the foreseeing determination unit 113 obtains a new running route. The new running route obtained by the foreseeing determination unit 113 is used in the processing to be performed by the object identification unit 105, the collision determination unit 106, and the input information determination unit 104A, in the same manner as the normal running route obtained by the running route computing unit 103.

The above embodiment 1 would be as follows in the example shown in FIG. 16. That is, information necessary for the selection processing to be performed by the input information determination unit 104 is acquired at the time point at which the operation of the target vehicle 1 has been shifted to an overtaking operation after the bus 2N has been stopped at the bus stop 7. Meanwhile, in embodiment 3, before stoppage of the bus 2N, the foreseeing determination unit 113 predicts overtaking to be performed by the target vehicle 1 and obtains a new running route, and the input information determination unit 104A performs selection processing by using the new running route. This enables the input information determination unit 104A to, before stoppage of the bus 2N, determine driving assist information necessary for the overtaking and transmit the driving assist information to the target vehicle 1.

Embodiment 3 achieves the following effect in addition to the same effects as those in the above embodiment 1. That is, a change in the running route due to the behavior of the nearby vehicle 2 is predicted, whereby driving assist information corresponding to the new running route can be transmitted to the target vehicle 1.

### Embodiment 4

FIG. 17 is a block diagram showing a configuration of an input information determination unit of a driving assist device according to embodiment 4. An input information determination unit 104B in embodiment 4 includes a special event detection unit 114 in addition to the vehicle group generation unit 111. It is noted that the overall configuration of a driving assist system according to embodiment 4 and the flow of an overall process to be performed by the driving assist device are the same as those in the above embodiment 1, and thus description thereof will be omitted (see FIG. 1 and FIG. 4).

The special event detection unit 114 detects at least flashing of a hazard warning flasher and a sudden stop of the nearby vehicle 2 on the basis of the second vehicle information. For determination of a sudden stop, acceleration information included in the second vehicle information is used. If a deceleration is equal to or larger than a preset threshold value, the special event detection unit 114 determines that the nearby vehicle 2 has performed a sudden stop. The vehicle group generation unit 111 generates a vehicle group 3 excluding the nearby vehicle 2 that is detected, by the special event detection unit 114, to have performed flashing of the hazard warning flasher or a sudden stop. The input information determination unit 104 performs selection processing excluding the nearby vehicle 2 that is detected, by the special event detection unit 114, to have performed flashing of the hazard warning flasher or a sudden stop.

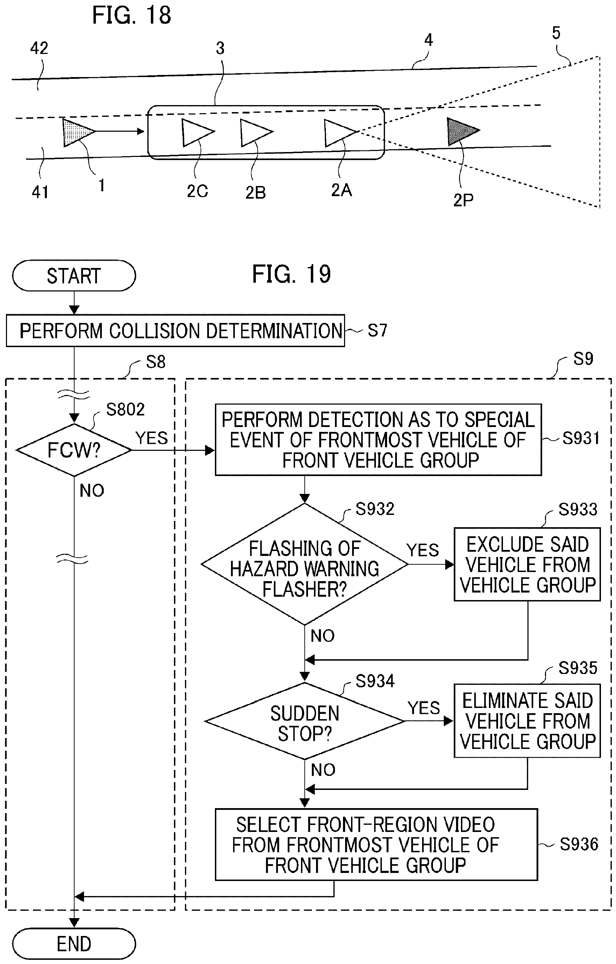

The special event detection unit 114 will be described with reference to FIG. 18. In an example shown in FIG. 18, a stopped vehicle 2P exists in front of a vehicle group 3 including the front vehicles 2A, 2B, and 2C located in front of the target vehicle 1. In the above embodiment 1, if the distance between vehicles is equal to or smaller than a threshold value (for example, 10 m), the vehicle group generation unit 111 regards the vehicles as one vehicle group 3, and thus, when the front vehicle 2A approaches the stopped vehicle 2P, a vehicle group 3 including the stopped vehicle 2P is generated.

If the collision determination unit 106 determines that the type of the collision is FCW, the input information determination unit 104 selects a front-region video from the frontmost vehicle of the front vehicle group as the driving assist information. Thus, if the vehicle group 3 includes the stopped vehicle 2P, a front-region video from the stopped vehicle 2P which is the frontmost vehicle is transmitted to the target vehicle 1, and the stopped vehicle 2P does not exist in the video. Therefore, the driver of the target vehicle 1 cannot notice the stopped vehicle 2P which could cause collision.

In order to avoid such a situation, in embodiment 4, the special event detection unit 114 detects flashing of a hazard warning flasher and a sudden stop of the nearby vehicle 2, and the input information determination unit 104 performs selection processing excluding the nearby vehicle 2 detected by the special event detection unit 114.

A part of the flow of selection processing to be performed in the driving assist device according to according to embodiment 4 will be described with reference to the flowchart in FIG. 19. If the collision determination unit 106 determines that the type of the collision is FCW in step S802 (Yes), the special event detection unit 114 performs detection as to a special event of the frontmost vehicle of the front vehicle group in step S931.

The vehicle group generation unit 111 generates a vehicle group 3 on the basis of the result of the detection by the special event detection unit 114. In step S932, the special event detection unit 114 determines whether or not a hazard warning flasher of the frontmost vehicle of the front vehicle group is flashing. If the special event detection unit 114 determines that the hazard warning flasher is flashing (Yes), the vehicle is excluded from the vehicle group in step S933.

Meanwhile, if the special event detection unit 114 determines that the hazard warning flasher is not flashing in step S932 (No), the special event detection unit 114 determines whether or not the frontmost vehicle of the front vehicle group is performing a sudden stop in step S934. If the special event detection unit 114 determines that the frontmost vehicle of the front vehicle group is performing a sudden stop (Yes), the frontmost vehicle is eliminated from the vehicle group in step S935. Meanwhile, if the special event detection unit 114 determines that the frontmost vehicle is not performing a sudden stop (No), the input information determination unit 104 selects a front-region video from the frontmost vehicle of the front vehicle group in step S936.

Embodiment 4 achieves the following effect in addition to the same effects as those in the above embodiment 1. That is, a stopped vehicle that could cause collision can be excluded from the vehicle group, whereby a video showing the stopped vehicle can be transmitted as the driving assist information to the target vehicle 1.

### Embodiment 5

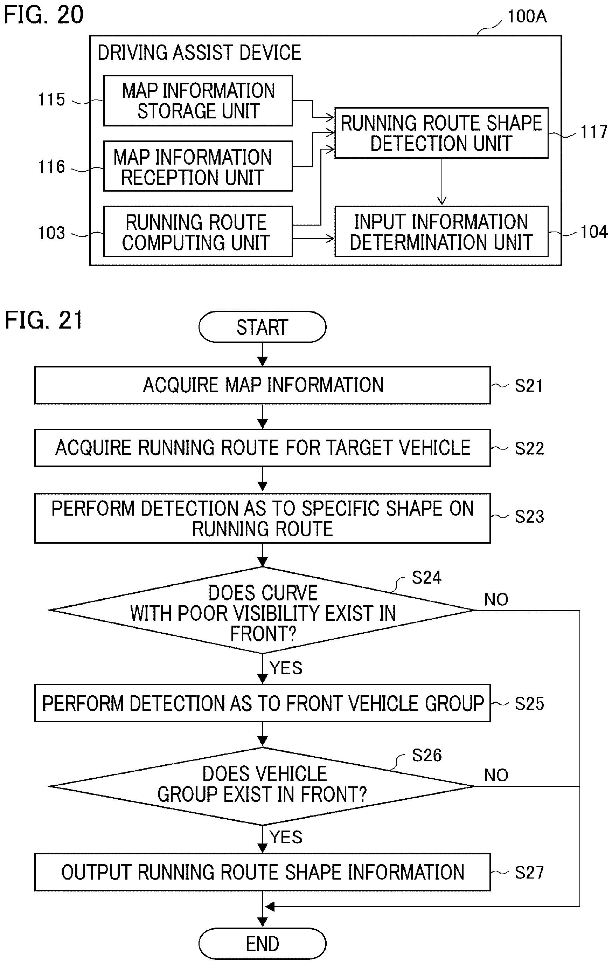

FIG. 20 is a block diagram showing a configuration of a driving assist device according to embodiment 5. A driving assist device 100A according to embodiment 5 includes a map information storage unit 115, a map information reception unit 116, and a running route shape detection unit 117 in addition to the same components (some of which are not shown) as those of the driving assist device 100 according to the above embodiment 1. It is noted that the overall configuration of a driving assist system according to embodiment 5 and the flow of an overall process to be performed by the driving assist device 100A are the same as those in the above embodiment 1, and thus description thereof will be omitted (see FIG. 1 and FIG. 4).

The map information storage unit 115 stores map information including a running route, and the map information reception unit 116 receives the map information including the running route from outside. It is noted that both or one of the map information storage unit 115 and the map information reception unit 116 may be provided.

The running route shape detection unit 117 detects, on the basis of the map information, the running route, and the first vehicle information, any of specific shapes that exists on the running route and that is located in front of the target vehicle 1. It is noted that the specific shapes include shapes of: a curve; a branching point; a road-width-changed section; and the like. In particular, the specific shapes include shapes of: a curve with poor visibility; a road-width-changed section that comes into sight at the time of a right/left turn at a crossing or at the time of an entry to an alley; and the like. If the running route shape detection unit 117 detects a specific shape on the running route, the vehicle group generation unit 111 generates a vehicle group 3 on the basis of the specific shape, and the input information determination unit 104 performs selection processing on the basis of the specific shape.

Specifically, when the running route shape detection unit 117 detects a specific shape on the running route, the running route shape detection unit 117 outputs running route shape information to the input information determination unit 104. The vehicle group generation unit 111 generates a vehicle group 3 on the basis of the running route shape information. For example, if the shape of a curve with poor visibility is detected as a specific shape, the vehicle group generation unit 111 generates a vehicle group 3 including a nearby vehicle 2 running in front of the target vehicle 1.

The flow of a process to be performed by the running route shape detection unit 117 of the driving assist device 100A according to embodiment 5 will be described with reference to the flowchart in FIG. 21. In step S21, the running route shape detection unit 117 acquires map information from the map information storage unit 115 or the map information reception unit 116. Subsequently, in step S22, the running route shape detection unit 117 acquires a running route for the target vehicle 1 from the running route computing unit 103.

Then, in step S23, the running route shape detection unit 117 performs detection as to a specific shape on the running route. If the running route shape detection unit 117 determines that a curve with poor visibility exists in front in step S24 (Yes), the running route shape detection unit 117 performs detection as to a front vehicle group 3 in step S25. Subsequently, if the running route shape detection unit 117 determines that a vehicle group exists in front in step S26 (Yes), the running route shape detection unit 117 outputs running route shape information to the vehicle group generation unit 111 in step S27.

Meanwhile, if the running route shape detection unit 117 determines that no curve with poor visibility exists in front in step S24 (No) or determines that no vehicle group 3 exists in front in step S26 (No), no vehicle group 3 needs to be or can be generated. Thus, the process is ended. Although FIG. 21 shows an example in which the running route shape detection unit 117 detects a curve with poor visibility, the same process is performed also if a branching point or a road-width-changed section on the running route is detected.

Embodiment 5 achieves the following effect in addition to the same effects as those in the above embodiment 1. That is, a video corresponding to the specific shape on the running route can be transmitted as the driving assist information to the target vehicle 1.

### Embodiment 6

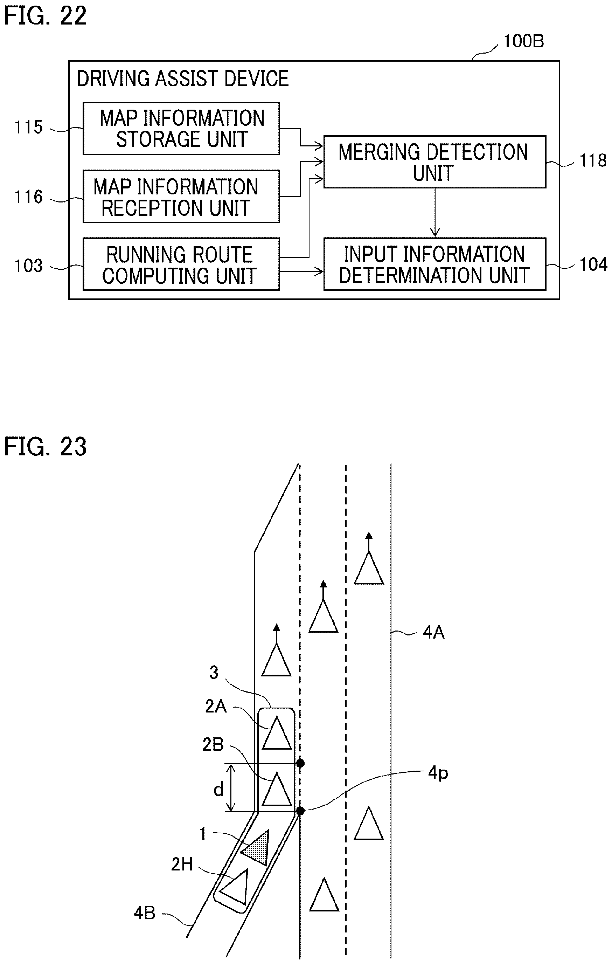

FIG. 22 is a block diagram showing a configuration of a driving assist device according to embodiment 6. A driving assist device 100B according to embodiment 6 includes the map information storage unit 115, the map information reception unit 116, and a merging detection unit 118 in addition to the same components (some of which are not shown) as those of the driving assist device 100 according to the above embodiment 1. It is noted that the overall configuration of a driving assist system according to embodiment 6 and the flow of an overall process to be performed by the driving assist device 100B are the same as those in the above embodiment 1, and thus description thereof will be omitted (see FIG. 1 and FIG. 4).

The map information storage unit 115 stores map information including a running route, and the map information reception unit 116 receives the map information including the running route from outside. It is noted that both or one of the map information storage unit 115 and the map information reception unit 116 may be provided. The merging detection unit 118 detects, on the basis of the map information, the running route, and the first vehicle information, a merging direction and a merging point that exists on the running route and that is located in front of the target vehicle 1. Methods for detection as to merging by the merging detection unit 118 include : a method in which the detection is performed on the basis of a road shape obtained from the map information; a method in which detection that the target vehicle 1 has approached a merging point is performed by using the map information including merging point information; and the like.

If the merging detection unit 118 detects a merging point, the vehicle group generation unit 111 generates a vehicle group 3 on the basis of a merging direction and the merging point, and the input information determination unit 104 performs selection processing on the basis of the merging direction and the merging point. Specifically, when the merging detection unit 118 detects a merging point that is on the running route and that is located in front of the target vehicle 1, the merging detection unit 118 outputs merging point information including the position of the merging point and the merging direction to the input information determination unit 104.

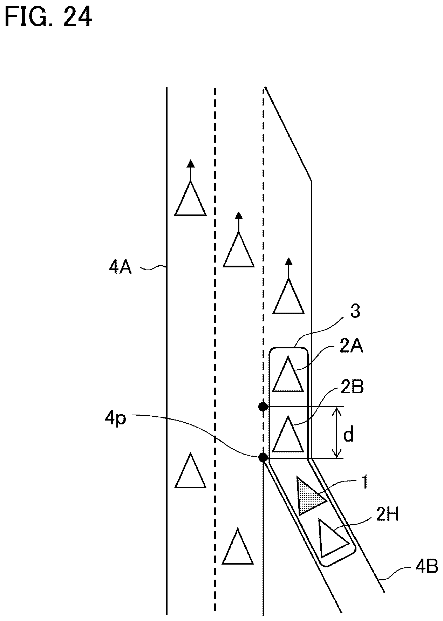

Selection processing to be performed by the input information determination unit 104 of the driving assist device 100B will be described with reference to FIG. 23 and FIG. 24. FIG. 23 shows an example of high-speed merging in which a merging lane exists on the left side of a main lane. FIG. 24 shows an example of high-speed merging in which a merging lane exists on the right side of a main lane. When the merging point information is outputted from the merging detection unit 118, the vehicle group generation unit 111 generates a vehicle group 3 including the target vehicle 1, the front vehicles 2A and 2B, and the rear vehicle 2H.

In the selection processing, the input information determination unit 104 selects the front vehicle 2B that is closest to the target vehicle 1 and that is still running in the merging lane 4B. However, when the front vehicle 2B is running before a merging point 4p, a video of the main lane 4A cannot be recorded. Thus, a video from the front vehicle 2B is acquired when the front vehicle 2B has passed the merging point 4p and the distance to the merging point 4p has become equal to or larger than a preset threshold value d (for example, 5 m).

The example shown in FIG. 23 illustrates merging from the left side, and thus a video of a right-side rear region recorded in the front vehicle 2B is transmitted to the target vehicle 1. Meanwhile, an example shown in FIG. 24 illustrates merging from the right side, and thus a video of a left-side rear region recorded in the front vehicle 2B is transmitted to the target vehicle 1.

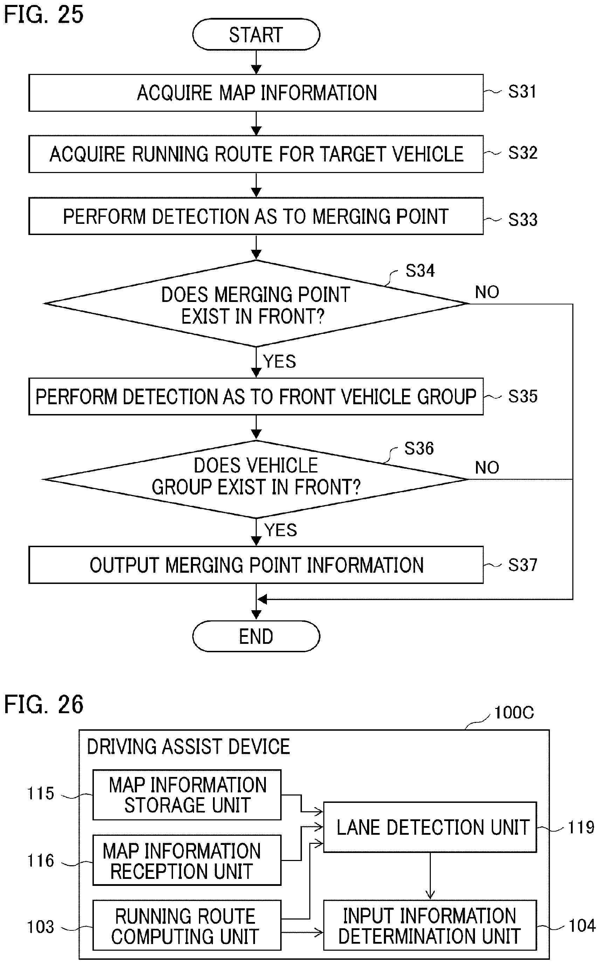

The flow of a process to be performed by the merging detection unit 118 of the driving assist device 100B according to embodiment 6 will be described with reference to the flowchart in FIG. 25. In step S31, the merging detection unit 118 acquires map information from the map information storage unit 115 or the map information reception unit 116. Subsequently, in step S32, the merging detection unit 118 acquires a running route for the target vehicle 1 from the running route computing unit 103.

Then, in step S33, the merging detection unit 118 performs detection as to a front merging point on the running route. If the merging detection unit 118 determines that a merging point exists in front in step S34 (Yes), the merging detection unit 118 performs detection as to a front vehicle group 3 in step S35. Subsequently, if the merging detection unit 118 determines that a vehicle group exists in front in step S36 (Yes), the merging detection unit 118 outputs merging point information to the vehicle group generation unit 111 in step S37.

Meanwhile, if the merging detection unit 118 determines that no merging point exists in front in step S34 (No) or determines that no vehicle group 3 exists in front in step S36 (No), no vehicle group 3 needs to be or can be generated. Thus, the process is ended.

Embodiment 6 achieves the following effect in addition to the same effects as those in the above embodiment 1. That is, a video corresponding to the merging direction and the merging point on the running route can be transmitted as the driving assist information to the target vehicle 1.

### Embodiment 7

FIG. 26 is a block diagram showing a configuration of a driving assist device according to embodiment 7. A driving assist device 100C according to embodiment 7 includes the map information storage unit 115, the map information reception unit 116, and a lane detection unit 119 in addition to the same components (some of which are not shown) as those of the driving assist device 100 according to the above embodiment 1. It is noted that the overall configuration of a driving assist system according to embodiment 7 and the flow of an overall process to be performed by the driving assist device 100C are the same as those in the above embodiment 1, and thus description thereof will be omitted (see FIG. 1 and FIG. 4).

The map information storage unit 115 stores map information including a running route, and the map information reception unit 116 receives the map information including the running route from outside. It is noted that both or one of the map information storage unit 115 and the map information reception unit 116 may be provided. The lane detection unit 119 detects, on the basis of the map information, the running route, and the first vehicle information, a lane in which the target vehicle 1 is running and another lane adjacent to the lane. Methods for detecting lanes by the lane detection unit 119 include a method in which lane positional information included in the map information and positional information about the target vehicle 1 are compared to each other.

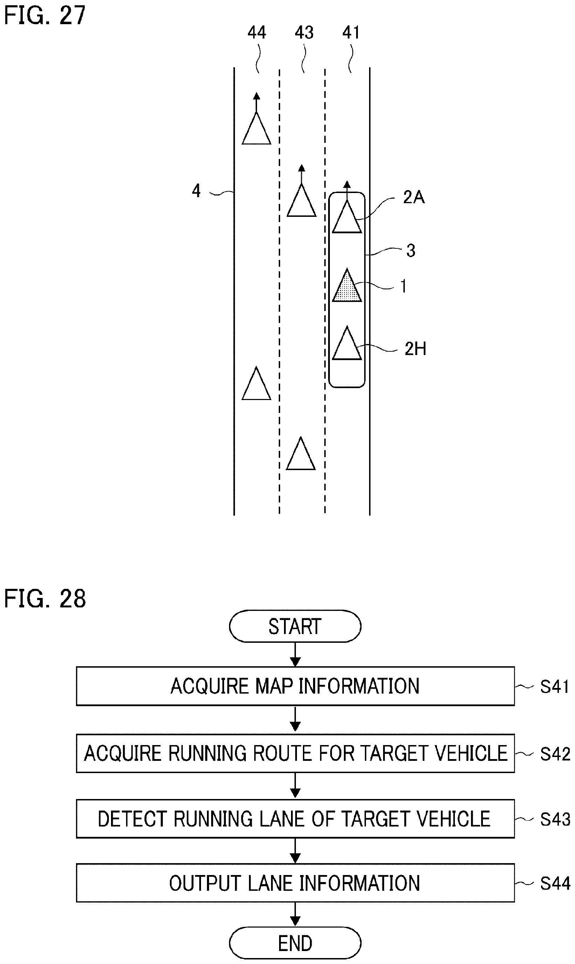

The lane detection unit 119 of the driving assist device 100C will be described with reference to FIG. 27. In an example shown in FIG. 27, the target vehicle 1 is running on a road 4 having lanes 41, 43, and 44. In such a case, the lane detection unit 119 performs detection as to on which of the right lane 41, the center lane 43, and the left lane 44 the target vehicle 1 is running. Further, the lane detection unit 119 detects the other lanes 43 and 44 adjacent to the lane 41 in which the target vehicle 1 is running, and outputs information about these lanes as lane information.

If the lane detection unit 119 detects another lane, the vehicle group generation unit 111 generates a vehicle group 3 excluding a nearby vehicle 2 running in the other lane on the basis of the lane information and the second vehicle information, and the input information determination unit 104 performs selection processing excluding the nearby vehicle 2 running in the other lane. In the example shown in FIG. 27, a vehicle group 3 is generated excluding the nearby vehicles 2 running in the lanes 43 and 44.

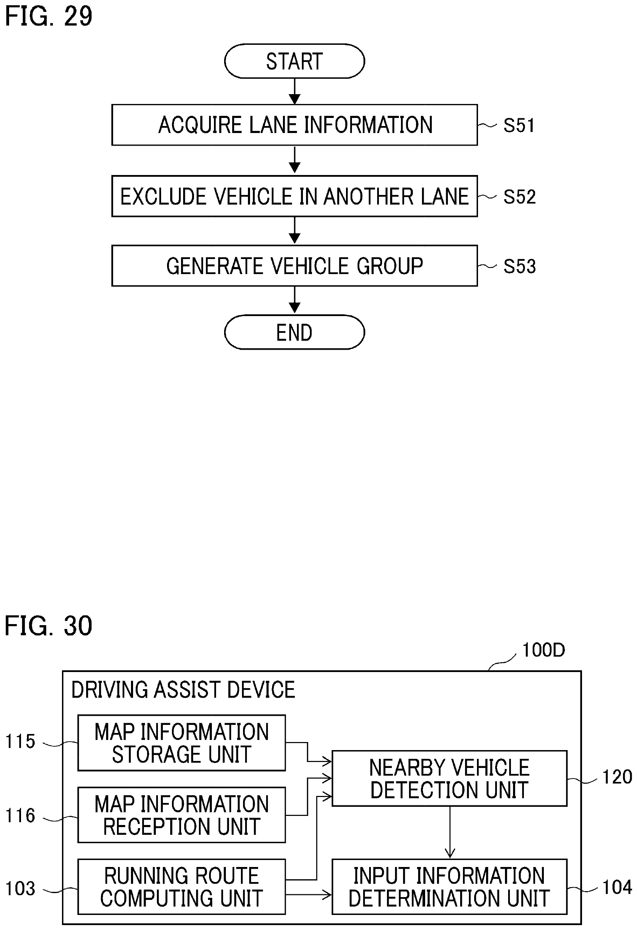

The flows of processes to be performed by the lane detection unit 119 and the vehicle group generation unit 111 of the driving assist device 100C according to embodiment 7 will be described with reference to the flowcharts in FIG. 28 and FIG. 29. In step S41 in FIG. 28, the lane detection unit 119 acquires map information from the map information storage unit 115 or the map information reception unit 116. Subsequently, in step S42, the lane detection unit 119 acquires a running route for the target vehicle 1 from the running route computing unit 103.

Then, in step S43, the lane detection unit 119 detects a running lane of the target vehicle 1 and further detects another lane adjacent to the running lane of the target vehicle 1, on the basis of the map information, the running route, and the first vehicle information. Subsequently, in step S44, the lane detection unit 119 outputs lane information including information about the running lane and the other lane to the input information determination unit 104, and the process is ended.

Then, in step S51 in FIG. 29, the vehicle group generation unit 111 acquires the lane information from the lane detection unit 119. Subsequently, in step S52, the vehicle group generation unit 111 excludes a nearby vehicle 2 running in the other lane from the vehicle group 3. The nearby vehicle 2 running in the other lane can be detected on the basis of the second vehicle information registered in the vehicle information list. Then, in step S53, the vehicle group generation unit 111 generates a vehicle group 3 including a nearby vehicle 2 running in the same lane as that of target vehicle 1, and the process is ended.

Embodiment 7 achieves the following effect in addition to the same effects as those in the above embodiment 1. That is, a video recorded by the camera of the nearby vehicle 2 running in the other lane can be prevented from being transmitted as the driving assist information to the target vehicle 1.

### Embodiment 8

FIG. 30 is a block diagram showing a configuration of a driving assist device according to embodiment 8. A driving assist device 100D according to embodiment 8 includes a nearby vehicle detection unit 120 in addition to the same components (some of which are not shown) as those of the driving assist device 100 according to the above embodiment 1. It is noted that the overall configuration of a driving assist system according to embodiment 8 and the flow of an overall process to be performed by the driving assist device 100D are the same as those in the above embodiment 1, and thus description thereof will be omitted (see FIG. 1 and FIG. 4).

The nearby vehicle detection unit 120 detects, on the basis of the first vehicle information, the second vehicle information, and the running route, another nearby vehicle 2 at a distance equal to or smaller than a preset threshold value from the nearby vehicle 2 selected by the input information determination unit 104. If the nearby vehicle detection unit 120 detects another nearby vehicle 2, the vehicle group generation unit 111 generates a vehicle group 3 including the other nearby vehicle 2, and the input information determination unit 104 performs selection processing while including the other nearby vehicle 2.

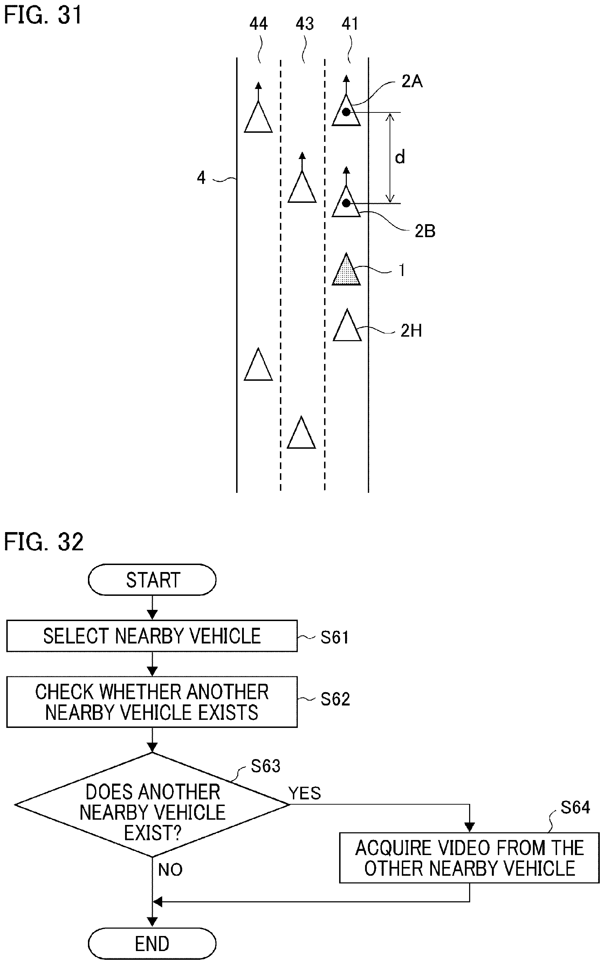

The nearby vehicle detection unit 120 of the driving assist device 100D will be described with reference to FIG. 31. In an example shown in FIG. 31, the target vehicle 1 is running on the road 4 having the lanes 41, 43, and 44, and a front vehicle 2B in the same lane 41 as that of the target vehicle 1 has been registered in the vehicle information list and selected by the input information determination unit 104. The input information determination unit 104 inquires of the nearby vehicle detection unit 120 about whether another nearby vehicle 2 exists in front of the selected front vehicle 2B.

The nearby vehicle detection unit 120 inquired of by the input information determination unit 104 detects another nearby vehicle 2 (in FIG. 31, a front vehicle 2A) at a distance equal to or smaller than a threshold value d (for example, 10 m) from the front vehicle 2B and outputs the result of the detection to the input information determination unit 104. Although FIG. 31 shows a case where the other nearby vehicle 2 exists in front of the selected front vehicle 2B, the same applies to a case where another nearby vehicle 2 exists behind a selected rear vehicle 2H.

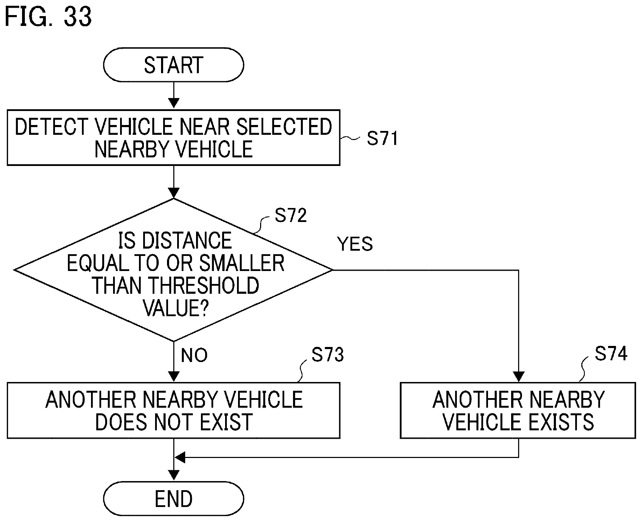

The flows of processes to be performed by the input information determination unit 104 and the nearby vehicle detection unit 120 of the driving assist device 100D according to embodiment 8 will be described with reference to the flowcharts in FIG. 32 and FIG. 33. In step S61 in FIG. 32, the input information determination unit 104 selects a nearby vehicle 2 through selection processing. Subsequently, in step S62, the input information determination unit 104 performs a check by inquiring of the nearby vehicle detection unit 120 about whether another nearby vehicle 2 exists near the selected nearby vehicle 2.

If the nearby vehicle detection unit 120 determines that another nearby vehicle exists in step S63 as a result of the inquiry (Yes), the input information determination unit 104 acquires a video and second vehicle information from the other nearby vehicle 2 in step S64. The vehicle group generation unit 111 generates a vehicle group 3 including the other nearby vehicle 2, and the selection processing is performed again.

In step S71 in FIG. 33, the nearby vehicle detection unit 120 inquired of by the input information determination unit 104 detects a vehicle near the selected nearby vehicle 2. Subsequently, in step S72, the nearby vehicle detection unit 120 determines whether or not the distance from the selected nearby vehicle 2 to the detected vehicle is equal to or smaller than the threshold value.

If the nearby vehicle detection unit 120 determines that the distance is larger than the threshold value in step S72 (No), the nearby vehicle detection unit 120 sends an output indicating that another nearby vehicle does not exist in step S73, and the process is ended. Meanwhile, if the nearby vehicle detection unit 120 determines that the distance is equal to or smaller than the threshold value in step S72 (Yes), the nearby vehicle detection unit 120 sends an output indicating that another nearby vehicle exists in step S74, and the process is ended.

Embodiment 8 achieves the following effect in addition to the same effects as those in the above embodiment 1. That is, if another nearby vehicle 2 exists in front of or behind the selected nearby vehicle 2, the selection processing can be performed again while the other nearby vehicle 2 is included, whereby driving assist further flexibly adapted to, for example, the running route for and the operational information about the target vehicle 1 can be performed.

### Embodiment 9

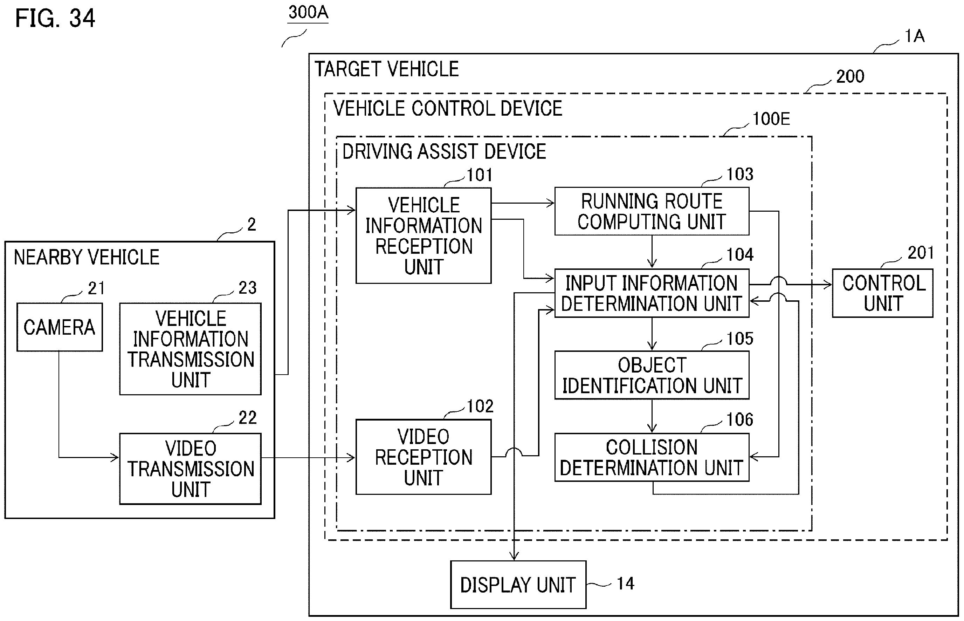

FIG. 34 is a block diagram showing a configuration of a driving assist system according to embodiment 9. A driving assist system 300A according to embodiment 9 includes a driving assist device 100E configured to communicate with each of nearby vehicles 2 running near a target vehicle 1A and to perform driving assist on the target vehicle 1A. Although the driving assist device 100 according to the above embodiment 1 (see FIG. 1) is a server installed at a base station or the like, the driving assist device 100E according to embodiment 9 is mounted in the target vehicle 1A. Although one nearby vehicle 2 is shown in FIG. 34, the number of the nearby vehicles 2 is not particularly limited and may be more than one depending on the situation of the road.

The driving assist system 300A further includes the nearby vehicle 2 provided with: the camera 21; the video transmission unit 22; and the vehicle information transmission unit 23. The vehicle information transmission unit 23 transmits second vehicle information including positional information and operational information about the nearby vehicle 2 to the driving assist device 100E. The second vehicle information includes latitude information, longitude information, speed information, acceleration information, azimuth information, and the like about the nearby vehicle 2. The video transmission unit 22 transmits a video recorded by the camera 21 of the nearby vehicle 2 to the driving assist device 100E.

The driving assist device 100E includes: the vehicle information reception unit 101 and the video reception unit 102 which are reception units; the running route computing unit 103; the input information determination unit 104; the object identification unit 105; and the collision determination unit 106.

The vehicle information reception unit 101 receives the second vehicle information transmitted from the vehicle information transmission unit 23. The video reception unit 102 receives the video recorded by the camera 21 of the nearby vehicle 2 and transmitted from the video transmission unit 22 thereof. The second vehicle information received by the vehicle information reception unit 101 is registered in a vehicle information list (not shown) of the driving assist device 100E. The running route computing unit 103 acquires first vehicle information including positional information and operational information about the target vehicle 1A and obtains a running route for the target vehicle 1A on the basis of the first vehicle information.

The input information determination unit 104 determines driving assist information including the video recorded by the camera 21 of a nearby vehicle 2, on the basis of at least the first vehicle information, the second vehicle information, and the running route. The input information determination unit 104 selects any of the nearby vehicles 2 in which a video to be used for the driving assist and showing a region incapable of being captured by a camera (not shown) of the target vehicle 1A can be recorded (selection processing), and determines the video acquired from the selected nearby vehicle 2 as the driving assist information. The video included in the driving assist information is displayed on the display unit 14 of the target vehicle 1A.

The input information determination unit 104 includes the vehicle group generation unit 111 (see FIG. 2). The vehicle group generation unit 111 generates a vehicle group 3 including one or more nearby vehicles 2 running in front of or behind the target vehicle 1A, on the basis of the first vehicle information, the second vehicle information, and the running route.

The object identification unit 105 identifies, on the basis of the video acquired from the nearby vehicle 2 and the running route for the target vehicle 1A obtained by the running route computing unit 103, an object existing on the running route. The collision determination unit 106 determines, on the basis of the first vehicle information, the second vehicle information, the video acquired from the nearby vehicle 2, and the running route, whether or not there is a possibility of a collision between the target vehicle 1A and the object, and a type of the collision. The result of the determination by the collision determination unit 106 is inputted to the input information determination unit 104.

The target vehicle 1A includes a vehicle control device 200. The vehicle control device 200 includes the driving assist device 100E and a control unit 201. The control unit 201 controls the target vehicle 1A on the basis of the driving assist information inputted from the input information determination unit 104 of the driving assist device 100E. Each of the driving assist device 100E and the control unit 201 can be composed of a processor and a storage device (see FIG. 3). Specifically, an MEC server is used.

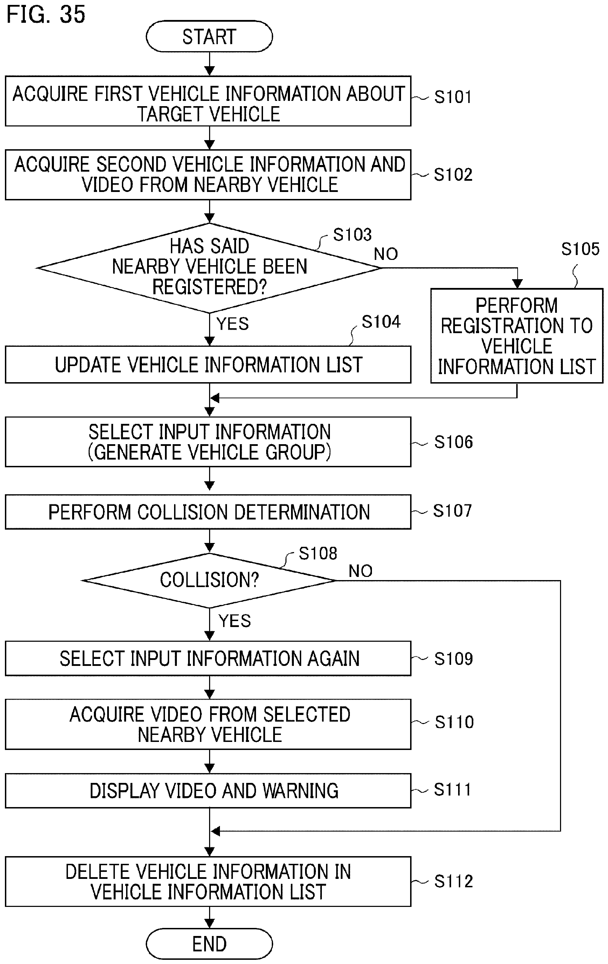

Next, the flow of an overall process to be performed by the driving assist device 100E will be described with reference to the flowchart in FIG. 35. First, in step S101, first vehicle information about the target vehicle 1A is acquired. In step S102, second vehicle information and a video are acquired from each of nearby vehicles 2. Then, determination as to whether or not the nearby vehicle 2 has already been registered, is made in step S103. Specifically, the vehicle information list is searched for the second vehicle information acquired in step S102, and association with the second vehicle information is performed.

If determination that the nearby vehicle 2 has been registered is made in step S103 (Yes), the vehicle information list is updated in step S104. Meanwhile, if determination that the nearby vehicle 2 has not been registered is made in step S103 (No), the second vehicle information about the nearby vehicle 2 is registered to the vehicle information list in step S105.

Subsequently, in step S106, the input information determination unit 104 selects information to be inputted to the target vehicle 1A. The vehicle group generation unit 111 generates a vehicle group 3 on the basis of the first vehicle information, the second vehicle information, and the running route. In a method for generating the vehicle group 3, if the distance between vehicles is equal to or smaller than a preset threshold value (for example, 10 m), the vehicles are regarded as one vehicle group 3.

Step S106 may merely involve generation of the vehicle group 3. Alternatively, if an object exists in a video acquired from any of the nearby vehicles 2 included in the vehicle group 3, step S106 may also involve selection of the video. However, the video selected in step S106 is not a video determined as the driving assist information.

Subsequently, in step S107, collision determination is performed. The collision determination unit 106 determines whether or not there is a possibility of a collision between the target vehicle 1A and the object identified by the object identification unit 105, and a type of the collision. Specifically, if the time to be taken before the collision between the target vehicle 1A and the object is equal to or smaller than a preset threshold value (for example, 5 seconds), the collision determination unit 106 determines that there is a possibility of a collision therebetween.

If the collision determination unit 106 determines that no collision is to occur in step S108 (No), the vehicle information registered in the vehicle information list is deleted in step S112, and the process is ended. Meanwhile, if the collision determination unit 106 determines that there is a possibility of a collision in step S108 (Yes), information to be inputted to the target vehicle 1A is selected again in selection processing in step S109. Then, in step S110, a video is acquired from the nearby vehicle 2 selected in step S109.

Subsequently, in step Sill, a warning message and the driving assist information which includes the video are displayed. Finally, in step S112, the vehicle information in the vehicle information list is deleted, and the process is ended. It is noted that the details of the collision determination in step S108 and the selection processing in step S109 are the same as those in the above embodiment 1, and thus description thereof will be omitted (see FIG. 5). Further, in the same manner as in the above embodiment 2, a check may be performed as to whether or not the object exists in the video selected correspondingly to the type of the collision, and the video with the object existing therein may be transmitted as the driving assist information (see FIG. 13 and FIG. 14).

Further, the input information determination unit 104 may include the map information acquisition unit 112 and the foreseeing determination unit 113 in the same manner as in the above embodiment 3 (see FIG. 15) . The map information acquisition unit 112 acquires map information including a running route for the target vehicle 1A obtained by the running route computing unit 103. The foreseeing determination unit 113 predicts a change in the running route due to a behavior of a nearby vehicle 2 and obtains a new running route in the case of occurrence of a change in the running route, on the basis of the running route, the map information, the first vehicle information, and the second vehicle information.

The vehicle group generation unit 111 generates a vehicle group 3 on the basis of the new running route obtained by the foreseeing determination unit 113. The input information determination unit 104A performs selection processing on the basis of the new running route obtained by the foreseeing determination unit 113.

Further, the input information determination unit 104 may include the special event detection unit 114 in the same manner as in the above embodiment 4 (see FIG. 17). The special event detection unit 114 detects at least flashing of a hazard warning flasher and a sudden stop of the nearby vehicle 2 on the basis of the second vehicle information. For determination of a sudden stop, acceleration information included in the second vehicle information is used. If a deceleration is equal to or larger than a preset threshold value, the special event detection unit 114 determines that the nearby vehicle 2 has performed a sudden stop.

The vehicle group generation unit 111 generates a vehicle group 3 excluding the nearby vehicle 2 that is detected, by the special event detection unit 114, to have performed flashing of the hazard warning flasher or a sudden stop. The input information determination unit 104 performs selection processing excluding the nearby vehicle 2 that is detected, by the special event detection unit 114, to have performed flashing of the hazard warning flasher or a sudden stop.

Further, the driving assist device 100E may include the map information storage unit 115, the map information reception unit 116, and the running route shape detection unit 117 in the same manner as in the above embodiment 5 (see FIG. 20). The map information storage unit 115 stores map information including a running route, and the map information reception unit 116 receives the map information including the running route from outside. It is noted that both or one of the map information storage unit 115 and the map information reception unit 116 may be provided.

The running route shape detection unit 117 detects, on the basis of the map information, the running route, and the first vehicle information, any of specific shapes that exists on the running route and that is located in front of the target vehicle 1A. It is noted that the specific shapes include shapes of: a curve; a branching point; a road-width-changed section; and the like. If the running route shape detection unit 117 detects a specific shape on the running route, the vehicle group generation unit 111 generates a vehicle group 3 on the basis of the specific shape, and the input information determination unit 104 performs selection processing on the basis of the specific shape.

Further, the driving assist device 100E may include the merging detection unit 118 in the same manner as in the above embodiment 6 (see FIG. 22) . The merging detection unit 118 detects, on the basis of the map information, the running route, and the first vehicle information, a merging direction and a merging point that exists on the running route and that is located in front of the target vehicle 1A. Methods for detection as to merging by the merging detection unit 118 are the same as those in the above embodiment 6, and thus description thereof will be omitted. If the merging detection unit 118 detects a merging point, the vehicle group generation unit 111 generates a vehicle group 3 on the basis of a merging direction and the merging point, and the input information determination unit 104 performs selection processing on the basis of the merging direction and the merging point.

Further, the driving assist device 100E may include the lane detection unit 119 in the same manner as in the above embodiment 7 (see FIG. 26) . The lane detection unit 119 detects, on the basis of the map information, the running route, and the first vehicle information, a lane in which the target vehicle 1A is running and another lane adjacent to the lane. Methods for detecting lanes by the lane detection unit 119 are the same as those in the above embodiment 7, and thus description thereof will be omitted. If the lane detection unit 119 detects another lane, the vehicle group generation unit 111 generates a vehicle group 3 excluding a nearby vehicle 2 running in the other lane, and the input information determination unit 104 performs selection processing excluding the nearby vehicle 2 running in the other lane.

Further, the driving assist device 100E may include the nearby vehicle detection unit 120 in the same manner as in the above embodiment 8 (see FIG. 30). The nearby vehicle detection unit 120 detects, on the basis of the first vehicle information, the second vehicle information, and the running route, another nearby vehicle 2 at a distance equal to or smaller than a preset threshold value from the nearby vehicle 2 selected by the input information determination unit 104. If the nearby vehicle detection unit 120 detects another nearby vehicle 2, the vehicle group generation unit 111 generates a vehicle group 3 including the other nearby vehicle 2, and the input information determination unit 104 performs selection processing while including the other nearby vehicle 2.

The driving assist device 100E and the driving assist system 300A according to embodiment 9 are configured such that: the nearby vehicle 2 located at the position at which the video to be used for the driving assist can be recorded is selected on the basis of the first vehicle information, the second vehicle information, and the running route; and the video acquired from the selected nearby vehicle 2 is determined as the driving assist information. Consequently, driving assist flexibly adapted to, for example, the running route for and the operational information about the target vehicle 1A can be performed. In addition, if an MEC server is used as the driving assist device 100E, a higher throughput and a lower delay are achieved than in a conventional driving assist system in which V2V communication is used.

In addition, the vehicle control device 200 according to embodiment 9 is configured such that: the nearby vehicle 2 located at the position at which the video to be used for the driving assist can be recorded is selected on the basis of the first vehicle information, the second vehicle information, and the running route; and the target vehicle 1A is controlled on the basis of the driving assist information including the video acquired from the selected nearby vehicle 2. Consequently, control flexibly adapted to the running route for and the operational information about the target vehicle 1A can be performed.

### DESCRIPTION OF THE REFERENCE CHARACTERS

1, 1A target vehicle
2 nearby vehicle
2A, 2B, 2C front vehicle
2D, 2E, 2F, 2G oncoming vehicle
2H, 2J, 2K rear vehicle
2N bus
2P stopped vehicle
3 vehicle group
4 road
4A main lane
4B merging lane
4p merging point
5, 5A, 5B capturing range
6 pedestrian
7 bus stop
11 vehicle information transmission unit
12 warning reception unit
13 driving assist information reception unit
14 display unit
21 camera
22 video transmission unit
23 vehicle information transmission unit
41, 43, 44 lane
42 opposite lane
100, 100A, 100B, 100C, 100D, 100E driving assist device
101 vehicle information reception unit
102 video reception unit
103 running route computing unit
104, 104A, 104B input information determination unit
105 object identification unit
106 collision determination unit
107 warning notification unit
108 driving assist information transmission unit
111 vehicle group generation unit
112 map information acquisition unit
113 foreseeing determination unit
114 special event detection unit
115 map information storage unit
116 map information reception unit
117 running route shape detection unit
118 merging detection unit
119 lane detection unit
120 nearby vehicle detection unit
130 processor
140 storage device
200 vehicle control device
201 control unit
300, 300A driving assist system

## Claims

1. A driving assist device configured to communicate with a target vehicle (1) and each of nearby vehicles (2) running near the target vehicle (1) and to perform driving assist on the target vehicle (1), the driving assist device comprising:
a reception unit (101, 102) configured to receive first vehicle information including positional information and operational information about the target vehicle (1), second vehicle information including positional information and operational information about each of the nearby vehicles (2), and a video recorded by a camera (21) of each of the nearby vehicles (2) ;
a running route computing unit (103) configured to obtain a running route for the target vehicle (1) on the basis of the first vehicle information;
an input information determination unit (104) configured to determine driving assist information on the basis of at least the first vehicle information, the second vehicle information, and the running route;
a transmission unit (108) configured to transmit the driving assist information determined by the input information determination unit (104) to the target vehicle (1), wherein
the input information determination unit (104) selects any of the nearby vehicles (2) that is located at a position at which a video to be used for the driving assist can be recorded, and determines the video acquired from the selected nearby vehicle (2) as the driving assist information;
an object identification unit (105) configured to identify, on the basis of the running route and a video acquired from any of the nearby vehicles (2), an object existing on the running route;
a collision determination unit (106) configured to determine, on the basis of the first vehicle information, the second vehicle information, the video, and the running route, whether or not there is a possibility of a collision between the target vehicle (1) and the object, and a type of the collision; and
a warning notification unit (107) configured to transmit a warning message to the target vehicle (1) if the collision determination unit (106) determines that there is a possibility of a collision with the object, wherein
if the collision determination unit (106) determines that there is a possibility of a collision with the object, the input information determination unit (104) performs again the selection on the basis of the type of the collision.

2. The driving assist device according to claim 1, wherein
the input information determination unit (104) includes a vehicle group generation unit (111) configured to generate, on the basis of the first vehicle information, the second vehicle information, and the running route, a vehicle group (3) including one or more of the nearby vehicles (2) that are running in front of or behind the target vehicle (1, 1A), and
the input information determination unit (104) performs the selection from among the nearby vehicles (2) included in the vehicle group (3).

3. The driving assist device according to claim 2,
if the collision determination unit (106) determines that there is a possibility of a collision with the object, the vehicle group generation unit (111) generates the vehicle group (3) on the basis of the type of the collision.

4. The driving assist device according to claim 3, wherein, if the object does not exist in the video acquired from the selected nearby vehicle (2), the input information determination unit (104) acquires a video with the object existing therein from another nearby vehicle (2) included in the vehicle group (3), and determines the video with the object existing therein as the driving assist information.

5. The driving assist device according to any one of claims 1 to 4, wherein
the input information determination unit (104A) includes:
a map information acquisition unit (112) configured to acquire map information including the running route; and
a foreseeing determination unit (113) configured to predict a change in the running route due to a behavior of any of the nearby vehicles (2) and obtain a new running route, on the basis of the running route, the map information, the first vehicle information, and the second vehicle information, and
the input information determination unit (104A) performs the selection on the basis of the new running route obtained by the foreseeing determination unit (113).

6. The driving assist device according to claim 2, wherein
the input information determination unit (104A) includes:
a map information acquisition unit (112) configured to acquire map information including the running route; and
a foreseeing determination unit (113) configured to predict a change in the running route due to a behavior of any of the nearby vehicles (2) and obtain a new running route, on the basis of the running route, the map information, the first vehicle information, and the second vehicle information, and
the vehicle group generation unit (111) generates the vehicle group (3) on the basis of the new running route obtained by the foreseeing determination unit (113).

7. The driving assist device according to any one of claims 1 to 6, wherein
the input information determination unit (104B) includes
a special event detection unit (114) configured to detect flashing of a hazard warning flasher and a sudden stop of the nearby vehicle (2) on the basis of the second vehicle information, and
the input information determination unit (104B) performs the selection excluding the nearby vehicle (2) that is detected, by the special event detection unit (114), to have performed flashing of the hazard warning flasher or a sudden stop.

8. The driving assist device according to claim 2, wherein
the input information determination unit (104B) includes
a special event detection unit (114) configured to detect flashing of a hazard warning flasher and a sudden stop of the nearby vehicle (2) on the basis of the second vehicle information, and
the vehicle group generation unit (111) generates the vehicle group (3) excluding the nearby vehicle (2) that is detected, by the special event detection unit (114), to have performed flashing of the hazard warning flasher or a sudden stop.

9. The driving assist device according to any one of claims 1 to 8, further comprising:
one or both of a map information reception unit (116) configured to receive map information including the running route from outside and a map information storage unit (115) configured to store the map information; and
a running route shape detection unit (117) configured to detect, on the basis of the map information, the running route, and the first vehicle information, any of specific shapes that exists on the running route and that is located in front of the target vehicle (1, 1A), wherein
the specific shapes include shapes of a curve, a branching point, and a road-width-changed section on the running route, and
if the running route shape detection unit (117) detects the specific shape, the input information determination unit (104) performs the selection on the basis of the specific shape.

10. The driving assist device according to claim 2, further comprising:
one or both of a map information reception unit (116) configured to receive map information including the running route from outside and a map information storage unit (115) configured to store the map information; and
a running route shape detection unit (117) configured to detect, on the basis of the map information, the running route, and the first vehicle information, any of specific shapes that exists on the running route and that is located in front of the target vehicle (1, 1A), wherein
the specific shapes include shapes of a curve, a branching point, and a road-width-changed section on the running route, and
if the running route shape detection unit (117) detects the specific shape, the vehicle group generation unit (111) generates the vehicle group (3) on the basis of the specific shape.

11. The driving assist device according to any one of claims 1 to 10, further comprising:
one or both of a map information reception unit (116) configured to receive map information including the running route from outside and a map information storage unit (115) configured to store the map information; and
a merging detection unit (118) configured to detect, on the basis of the map information, the running route, and the first vehicle information, a merging direction and a merging point that exists on the running route and that is located in front of the target vehicle (1, 1A), wherein
if the merging detection unit (118) detects the merging point, the input information determination unit (104) performs the selection on the basis of the merging direction and the merging point.

12. The driving assist device according to claim 2, further comprising:
one or both of a map information reception unit (116) configured to receive map information including the running route from outside and a map information storage unit (115) configured to store the map information; and
a merging detection unit (118) configured to detect, on the basis of the map information, the running route, and the first vehicle information, a merging direction and a merging point that exists on the running route and that is located in front of the target vehicle (1, 1A), wherein
if the merging detection unit (118) detects the merging point, the vehicle group generation unit (111) generates the vehicle group (3) on the basis of the merging direction and the merging point.

13. The driving assist device according to any one of claims 1 to 12, further comprising:
one or both of a map information reception unit (116) configured to receive map information including the running route from outside and a map information storage unit (115) configured to store the map information; and
a lane detection unit (119) configured to detect, on the basis of the map information, the running route, and the first vehicle information, a lane (41) in which the target vehicle (1, 1A) is running and another lane (43, 44) adjacent to the lane (41), wherein
if the lane detection unit (119) detects the other lane (43, 44), the input information determination unit (104) performs the selection excluding a nearby vehicle (2) that is running in the other lane (43, 44) among the nearby vehicles (2) .

14. The driving assist device according to claim 2, further comprising:
one or both of a map information reception unit (116) configured to receive map information including the running route from outside and a map information storage unit (115) configured to store the map information; and
a lane detection unit (119) configured to detect, on the basis of the map information, the running route, and the first vehicle information, a lane (41) in which the target vehicle (1, 1A) is running and another lane (43, 44) adjacent to the lane (41), wherein
if the lane detection unit (119) detects the other lane (43, 44), the vehicle group generation unit (111) generates the vehicle group (3) excluding a nearby vehicle (2) that is running in the other lane (43, 44) among the nearby vehicles (2).

15. The driving assist device according to any one of claims 1 to 14, further comprising
a nearby vehicle detection unit (120) configured to detect another nearby vehicle (2) at a distance equal to or smaller than a threshold value from the nearby vehicle (2) selected by the input information determination unit (104), wherein
if the nearby vehicle detection unit (120) detects the other nearby vehicle (2), the input information determination unit (104) performs the selection while including the other nearby vehicle (2).

16. The driving assist device according to claim 2, further comprising
a nearby vehicle detection unit (120) configured to detect another nearby vehicle (2) at a distance equal to or smaller than a threshold value from the nearby vehicle (2) selected by the input information determination unit (104), wherein
if the nearby vehicle detection unit (120) detects the other nearby vehicle (2), the vehicle group generation unit (111) generates the vehicle group (3) including the other nearby vehicle (2).

17. A driving assist system comprising
a driving assist device (100) according to any one of claims 1 to 16, wherein
the target vehicle (1) includes
a first vehicle information transmission unit (11) configured to transmit the first vehicle information to the driving assist device (100), and
a reception unit (13) configured to receive the driving assist information determined by the input information determination unit (104), and
the nearby vehicle (2) includes
a second vehicle information transmission unit (23) configured to transmit the second vehicle information to the driving assist device (100), and
a video transmission unit (22) configured to transmit the video recorded by the camera (21) to the driving assist device (100).

18. A driving assist method for performing driving assist on a target vehicle (1, 1A), the driving assist method comprising:
a first step of acquiring first vehicle information including positional information and operational information about the target vehicle (1, 1A), second vehicle information including positional information and operational information about each of nearby vehicles (2) running near the target vehicle (1, 1A), and a video recorded by a camera (21) of each of the nearby vehicles (2);
a second step of obtaining a running route for the target vehicle (1, 1A) on the basis of the first vehicle information;
a third step of determining driving assist information on the basis of at least the first vehicle information, the second vehicle information, and the running route, wherein
the third step includes selecting any of the nearby vehicles (2) that is located at a position at which a video to be used for the driving assist can be recorded, and determining the video acquired from the selected nearby vehicle (2) as the driving assist information;
a fourth step of identifying, on the basis of the running route and a video acquired from any of the nearby vehicles (2), an object existing on the running route;
a fifth step of determining, on the basis of the first vehicle information, the second vehicle information, the video, and the running route, whether or not there is a possibility of a collision between the target vehicle (1) and the object, and a type of the collision; and
a sixth step of transmitting a warning message to the target vehicle (1) if it is determined in the fifth step that there is a possibility of a collision with the object, wherein
if it is determined that there is a possibility of a collision with the object, the selecting is performed again on the basis of the type of the collision.

## Patentansprüche

1. Fahrassistenzvorrichtung konfiguriert zur Kommunikation mit einem Zielfahrzeug (1) und jedem der in der Nähe befindlichen Fahrzeuge (2), die in der Nähe des Zielfahrzeugs (1) fahren, und zur Durchführung einer Fahrassistenz am Zielfahrzeug (1), wobei die Fahrassistenzvorrichtung umfasst:
eine Empfangseinheit (101, 102) konfiguriert zum Empfangen von ersten Fahrzeuginformationen, die Positionsinformationen und Betriebsinformationen über das Zielfahrzeug (1) enthalten, zweiten Fahrzeuginformationen, die Positionsinformationen und Betriebsinformationen über das in der Nähe befindliche Fahrzeug (2) enthalten, und ein von einer Kamera (21) aufgezeichnetes Video des in der Nähe befindlichen Fahrzeugs (2);
eine Fahrstreckenrecheneinheit (103) konfiguriert zum Erhalten einer Fahrstrecke für das Zielfahrzeug (1) auf der Grundlage der ersten Fahrzeuginformationen;
eine Eingabeinformationsbestimmungseinheit (104) konfiguriert zur Bestimmung von Fahrassistenzinformationen auf der Grundlage mindestens der ersten Fahrzeuginformationen, der zweiten Fahrzeuginformationen und der Fahrstrecke;
eine Übertragungseinheit (108) konfiguriert zur Übertragung der Fahrassistenzinformation, die von der Eingabeinformationsbestimmungseinheit (104) bestimmt sind, an das Zielfahrzeug (1), wobei
die Eingabeinformationsbestimmungseinheit (104) eines der in der Nähe befindlichen Fahrzeuge (2) auswählt, das sich an einer Position befindet, an der ein Video aufgezeichnet werden kann, das für die Fahrassistenz verwendet werden soll, und das von dem ausgewählten in der Nähe befindlichen Fahrzeug (2) erfasste Video als Fahrassistenzinformation bestimmt;
eine Objektidentifikationseinheit (105) konfiguriert zum Identifizieren, auf der Grundlage der Fahrstrecke und eines von einem der in der Nähe befindlichen Fahrzeuge (2) erfassten Videos, eines auf der Fahrstrecke vorhandenen Objekts;
eine Kollisionsbestimmungseinheit (106) konfiguriert zum Bestimmen, auf der Grundlage der ersten Fahrzeuginformationen, der zweiten Fahrzeuginformationen, des Videos und der Fahrstrecke, ob die Möglichkeit einer Kollision zwischen dem Zielfahrzeug (1) und dem Objekt besteht oder nicht, sowie einer Art der Kollision; und
Warnnotifikationseinheit (107) konfiguriert zur Übermittlung einer Warnmeldung an das Zielfahrzeug (1), wenn die Kollisionsbestimmungseinheit (106) bestimmt, dass die Möglichkeit einer Kollision mit dem Objekt besteht, wobei
wenn die Kollisionsbestimmungseinheit (106) bestimmt, dass die Möglichkeit einer Kollision mit dem Objekt besteht, führt die Eingabeinformationsbestimmungseinheit (104) die Auswahl auf der Grundlage der Art der Kollision durch.

2. Fahrassistenzvorrichtung nach Anspruch 1, wobei
die Eingabeinformationsbestimmungseinheit (104) eine Fahrzeuggruppengenerierungseinheit (111) enthält, die so konfiguriert ist, dass sie auf der Grundlage der ersten Fahrzeuginformationen, der zweiten Fahrzeuginformationen und der Fahrstrecke eine Fahrzeuggruppe (3) generiert, die eines oder mehrere der in der Nähe befindlichen Fahrzeuge (2) enthält, die vor oder hinter dem Zielfahrzeug (1, 1A) fahren, und
die Eingabeinformationsbestimmungseinheit (104) die Auswahl unter den in der Fahrzeuggruppe (3) enthaltenen in der Nähe befindlichen Fahrzeugen (2) durchführt.

3. Fahrassistenzvorrichtung nach Anspruch 2, wobei
wenn die Kollisionsbestimmungseinheit (106) bestimmt, dass die Möglichkeit einer Kollision mit dem Objekt besteht, generiert die Fahrzeuggruppengenerierungseinheit (111) die Fahrzeuggruppe (3) auf der Grundlage der Art der Kollision.

4. Fahrassistenzvorrichtung nach Anspruch 3, wobei, wenn das Objekt in dem von dem ausgewählten in der Nähe befindlichen Fahrzeug (2) erfassten Video nicht vorhanden ist, die Eingabeinformationsbestimmungseinheit (104) ein Video mit dem darin vorhandenen Objekt von einem anderen in der Fahrzeuggruppe (3) enthaltenen in der Nähe befindlichen Fahrzeug (2) erfasst und das Video mit dem darin vorhandenen Objekt als Fahrassistenzinformation bestimmt.

5. Fahrassistenzvorrichtung nach einem der Ansprüche 1 bis 4, wobei
die Eingabeinformationsbestimmungseinheit (104A) enthält:
eine Karteninformationserfassungseinheit (112) konfiguriert zum Erfassen von Karteninformationen einschließlich der Fahrstrecke; und
eine vorhersehende Bestimmungseinheit (113) konfiguriert zum Vorhersehen einer Änderung der Fahrstrecke aufgrund eines Verhaltens eines der in der Nähe befindlichen Fahrzeuge (2) und zum Erfassen einer neuen Fahrstrecke, auf der Grundlage der Fahrstrecke, der Karteninformationen, der ersten Fahrzeuginformationen und der zweiten Fahrzeuginformationen, und
die Eingabeinformationsbestimmungseinheit (104A) die Auswahl auf der Grundlage der neuen Fahrroute durchführt, die von der vorhersehenden Bestimmungseinheit (113) erhalten wird.

6. Fahrassistenzvorrichtung nach Anspruch 2, wobei
die Eingabeinformationsbestimmungseinheit (104A) enthält:
eine Karteninformationserfassungseinheit (112) konfiguriert zum Erfassen von Karteninformationen einschließlich der Fahrstrecke; und
eine vorhersehende Bestimmungseinheit (113), konfiguriert zum Vorhersehen einer Änderung der Fahrstrecke aufgrund eines Verhaltens eines der in der Nähe befindlichen Fahrzeuge (2) und zum Erfassen einer neuen Fahrstrecke, der Grundlage der Fahrstrecke, der Karteninformationen, der ersten Fahrzeuginformationen und der zweiten Fahrzeuginformationen, und
die Fahrzeuggruppengenerierungseinheit (111) die Fahrzeuggruppe (3) auf der Grundlage der neuen Fahrstrecke generiert, die von der vorhersehenden Bestimmungseinheit (113) ermittelt wird.

7. Fahrassistenzvorrichtung nach einem der Ansprüche 1 bis 6, wobei
die Eingabeinformationsbestimmungseinheit (104B) enthält
eine Sonderereigniserkennungseinheit (114) konfiguriert zum Erkennen von Blinken einer Warnblinkanlage und eines plötzlichen Anhaltens des in der Nähe befindlichen Fahrzeugs (2) auf der Grundlage der zweiten Fahrzeuginformationen, und
die Eingabeinformationsbestimmungseinheit (104B) die Auswahl unter Ausschluss des in der Nähe befindlichen Fahrzeugs (2) durchführt, das von der Sonderereigniserkennungseinheit (114) als Fahrzeug erkannt wird, das das Blinken der Warnblinkanlage oder einen plötzlichen Stopp durchgeführt hat.

8. Fahrassistenzvorrichtung nach Anspruch 2, wobei
Die Eingabeinformationsbestimmungseinheit (104B) enthält
eine Sonderereigniserkennungseinheit (114) konfiguriert zum Erkennen von Blinken einer Warnblinkanlage und eines plötzlichen Anhaltens des in der Nähe befindlichen Fahrzeugs (2) auf der Grundlage der zweiten Fahrzeuginformationen, und
die Fahrzeuggruppengenerierungseinheit (111) die Fahrzeuggruppe (3) mit Ausnahme des in der Nähe befindlichen Fahrzeugs (2), das von der Sonderereigniserkennungseinheit (114) als Fahrzeug erkannt wird, das das Blinken der Warnblinkanlage oder einen plötzlichen Stopp durchgeführt hat.

9. Fahrassistenzvorrichtung nach einem der Ansprüche 1 bis 8, ferner umfassend:
eine oder beide einer Karteninformationsempfangseinheit (116) konfiguriert zum Empfangen von Karteninformationen einschließlich der Fahrstrecke von außerhalb und einer Karteninformationsspeichereinheit (115) konfiguriert zum Speichern der Karteninformationen ist; und
eine Fahrstreckenformerkennungseinheit (117) konfiguriert zum Erkennen, auf der Grundlage der Karteninformationen die Fahrstrecke und die erste Fahrzeuginformation, aller spezifischen Formen, die auf der Fahrstrecke vorhanden sind und sich vor dem Zielfahrzeug (1, 1A) befinden, wobei
zu den spezifischen Formen die Formen einer Kurve, eines Verzweigungspunkts und eines Abschnitts mit geänderter Straßenbreite auf der Fahrstrecke gehören, und
wenn die Fahrstreckenformerkennungseinheit (117) die spezifische Form erkennt, führt die Eingabeinformationsbestimmungseinheit (104) die Auswahl auf der Grundlage der spezifischen Form durch.

10. Fahrassistenzvorrichtung nach Anspruch 2, ferner umfassend:
eine oder beide einer Karteninformationsempfangseinheit (116) konfiguriert zum Empfangen von Karteninformationen einschließlich der Fahrstrecke von außerhalb, und einer Karteninformationsspeichereinheit (115) konfiguriert zum Speichern der Karteninformationen; und
eine Fahrstreckenformerkennungseinheit (117) konfiguriert zum Erkennen, auf der Grundlage der Karteninformationen, der Fahrstrecke und der ersten Fahrzeuginformation, aller spezifischen Formen, die auf der Fahrstrecke vorhanden sind und sich vor dem Zielfahrzeug (1, 1A) befinden, wobei
zu den spezifischen Formen die Formen einer Kurve, eines Verzweigungspunkts und eines Abschnitts mit geänderter Straßenbreite auf der Fahrstrecke gehören, und
wenn die Fahrstreckenformerkennungseinheit (117) die spezifische Form erkennt, generiert die Fahrzeuggruppengenerierungseinheit (111) die Fahrzeuggruppe (3) auf der Grundlage der spezifischen Form.

11. Fahrassistenzvorrichtung nach einem der Ansprüche 1 bis 10, ferner umfassend:
eine oder beide einer Karteninformationsempfangseinheit (116) konfiguriert zum Empfangen von Karteninformationen einschließlich der Fahrstrecke von außerhalb, und einer Karteninformationsspeichereinheit (115) konfiguriert zum Speichern der Karteninformationen; und
eine Einfädelungserkennungseinheit (118) konfiguriert zur Erkennung, auf der Grundlage der Karteninformationen, der Fahrstrecke und der ersten Fahrzeuginformation, einer Einfädelrichtung und eines Einfädelpunktes, die auf der Fahrstrecke vorhanden sind und sich vor dem Zielfahrzeug (1, 1A) befinden, wobei
wenn die Einfädelungserkennungseinheit (118) den Einfädelpunkt erkennt, führt die Eingabeinformationsbestimmungseinheit (104) die Auswahl auf der Grundlage der Einfädelrichtung und des Einfädelpunktes durch.

12. Fahrassistenzvorrichtung nach Anspruch 2, ferner umfassend:
eine oder beide einer Karteninformationsempfangseinheit (116) konfiguriert zum Empfangen von Karteninformationen einschließlich der Fahrstrecke von außerhalb, und einer Karteninformationsspeichereinheit (115) konfiguriert zum Speichern der Karteninformationen; und
eine Einfädelungserkennungseinheit (118) konfiguriert zum Erkennen, auf der Grundlage der Karteninformationen, der Fahrstrecke und der ersten Fahrzeuginformation, einer Einfädelrichtung und eines Einfädelpunktes, die auf der Fahrstrecke vorhanden sind und sich vor dem Zielfahrzeug (1, 1A) befinden, wobei
wenn die Einfädelungserkennungseinheit (118) den Einfädelpunkt erkennt, generiert die Fahrzeuggruppengenerierungseinheit (111) die Fahrzeuggruppe (3) auf der Grundlage der Einfädelrichtung und des Einfädelpunkts.

13. Fahrassistenzvorrichtung nach einem der Ansprüche 1 bis 12, ferner umfassend:
eine oder beide einer Karteninformationsempfangseinheit (116) konfiguriert zum Empfangen von Karteninformationen einschließlich der Fahrstrecke von außerhalb, und einer Karteninformationsspeichereinheit (115) konfiguriert zum Speichern der Karteninformationen; und
eine Fahrspurerkennungseinheit (119) konfiguriert zum Erkennen, auf der Grundlage der Karteninformationen, der Fahrstrecke und der ersten Fahrzeuginformation, einer Fahrspur (41), auf der das Zielfahrzeug (1, 1A) fährt, und einer weiteren Spur (43, 44), die an die Fahrspur (41) angrenzt,
wenn die Fahrspurerkennungseinheit (119) die andere Fahrspur (43, 44) erkennt, führt die Eingabeinformationsbestimmungseinheit (104) die Auswahl unter den in der Nähe befindlichen Fahrzeugen (2) aus, die ein in der Nähe befindliches Fahrzeug (2) ausschließen, das auf der anderen Fahrspur (43, 44) fährt.

14. Fahrassistenzvorrichtung nach Anspruch 2, ferner umfassend:
eine oder beide einer Karteninformationsempfangseinheit (116) konfiguriert zum Empfangen von Karteninformationen einschließlich der Fahrstrecke von außerhalb, und einer Karteninformationsspeichereinheit (115) konfiguriert zum Speichern der Karteninformationen; und
eine Fahrspurerkennungseinheit (119) konfiguriert zum Erkennen, auf der Grundlage der Karteninformationen, der Fahrstrecke und der ersten Fahrzeuginformation, einer Fahrspur (41), auf der das Zielfahrzeug (1, 1A) fährt, und einer weiteren Spur (43, 44), die an die Fahrspur (41) angrenzt,
wenn die Fahrspurerfassungseinheit (119) die andere Fahrspur (43, 44) erfasst, generiert die Fahrzeuggruppengenerierungseinheit (111) die Fahrzeuggruppe (3) unter Ausschluss eines Fahrzeugs (2), das auf der anderen Fahrspur (43, 44) unter den in der Nähe befindlichen Fahrzeugen (2) fährt.

15. Fahrassistenzvorrichtung nach einem der Ansprüche 1 bis 14, ferner umfassend
eine in-der-Nähe-befindliches-Fahrzeug-Erkennungseinheit (120) konfiguriert zum Erkennen eines anderen in der Nähe befindlichen Fahrzeuges (2) in einer Entfernung von dem in der Nähe befindlichen Fahrzeug (2) oder kleiner als einem Schwellenwert von dem in der Nähe befindlichen Fahrzeug (2), der von der Eingabeinformationsbestimmungseinheit (104) ausgewählt wurde, wobei
wenn die in-der-Nähe-befindliches-Fahrzeug-Erkennungseinheit (120) das andere in der Nähe befindliche Fahrzeug (2) erkennt, führt die Eingabeinformationsbestimmungseinheit (104) die Auswahl durch, während das andere in der Nähe befindliche Fahrzeug (2) einbezogen wird.

16. Fahrassistenzvorrichtung nach Anspruch 2, ferner umfassend
eine in-der-Nähe-befindliches-Fahrzeug-Erkennungseinheit (120) konfiguriert zum Erkennen eines anderen in der Nähe befindlichen Fahrzeuges (2) in einer Entfernung von dem in der Nähe befindlichen Fahrzeug (2) oder kleiner als einem Schwellenwert von dem in der Nähe befindlichen Fahrzeug (2), der von der Eingabeinformationsbestimmungseinheit (104) ausgewählt wurde, wobei
wenn die in-der-Nähe-befindliches-Fahrzeug-Erkennungseinheit (120) das andere in der Nähe befindliche Fahrzeug (2) erkennt, generiert die Fahrzeuggruppengenerierungseinheit (111) die Fahrzeuggruppe (3) einschließlich des anderen in der Nähe befindlichen Fahrzeugs (2).

17. Fahrassistenzsystem umfassend
eine Fahrassistenzvorrichtung (100) nach einem der Ansprüche 1 bis 16, wobei
das Zielfahrzeug (1) enthält
eine erste Fahrzeuginformationsübertragungseinheit (11) konfiguriert zur Übertragung der ersten Fahrzeuginformationen an die Fahrassistenzvorrichtung (100), und
eine Empfangseinheit (13) konfiguriert zum Empfangen der von der Eingabeinformationsbestimmungseinheit (104) bestimmten Fahrassistenzinformationen, und
das in der Nähe befindliche Fahrzeug (2) enthält
eine zweite Fahrzeuginformationsübertragungseinheit (23) konfiguriert zur Übertragung der zweiten Fahrzeuginformationen an die Fahrassistenzvorrichtung (100), und
eine Videoübertragungseinheit (22) konfiguriert zur Übertragung das von der Kamera (21) aufgezeichnete Video an die Fahrassistenzvorrichtung (100).

18. Fahrassistenzverfahren zum Ausführen einer Fahrassistenz an einem Zielfahrzeug (1, 1A), wobei das Fahrassistenzverfahren umfasst:
einen ersten Schritt zur Erfassung von ersten Fahrzeuginformationen einschließlich Positionsinformationen und Betriebsinformationen über das Zielfahrzeug (1, 1A), von zweiten Fahrzeuginformationen einschließlich Positionsinformationen und Betriebsinformationen über jedes der in der Nähe befindlichen Fahrzeuge (2), die in der Nähe des Zielfahrzeugs (1, 1A) fahren, und einem von einer Kamera (21) aufgezeichneten Video des in der Nähe befindlichen Fahrzeugs (2);
einen zweiten Schritt zum Erfassen einer Fahrstrecke für das Zielfahrzeug (1, 1A) auf der Grundlage der ersten Fahrzeuginformationen;
ein dritter Schritt zum Bestimmen von Fahrassistenzinformationen auf der Grundlage mindestens der ersten Fahrzeuginformationen, der zweiten Fahrzeuginformationen und der Fahrstrecke, wobei
der dritte Schritt die Auswahl eines der in der Nähe befindlichen Fahrzeuge (2), das sich an einer Position befindet, an der ein Video aufgenommen werden kann, das für die Fahrassistenz verwendet werden soll, und das Bestimmen des von dem ausgewählten in der Nähe befindlichen Fahrzeug (2) erfassten Videos als Fahrassistenzinformation enthält;
ein vierter Schritt zum Identifizieren, auf der Grundlage von der Fahrstrecke und eines Videos, das von einem der in der Nähe befindlichen Fahrzeuge (2) aufgenommen wurde, eines Objekts, das sich auf der Fahrstrecke befindet;
einen fünften Schritt zur Bestimmung, auf der Grundlage der ersten Fahrzeuginformationen, der zweiten Fahrzeuginformationen, des Videos und der Fahrstrecke, ob die Möglichkeit einer Kollision zwischen dem Zielfahrzeug (1) und dem Objekt besteht oder nicht, sowie einer Art der Kollision; und
einen sechsten Schritt zur Übermittlung einer Warnmeldung an das Zielfahrzeug (1), wenn im fünften Schritt bestimmt wird, dass die Möglichkeit einer Kollision mit dem Objekt besteht, wobei
wenn bestimmt wird, dass die Möglichkeit einer Kollision mit dem Objekt besteht, die Auswahl erneut erfolgt auf der Grundlage der Art der Kollision.

## Revendications

1. Un dispositif d'assistance à la conduite configuré pour communiquer avec un véhicule cible (1) et chacun des véhicules proches (2) circulant à proximité du véhicule cible (1) et pour effectuer une assistance à la conduite sur le véhicule cible (1), le dispositif d'assistance à la conduite comprenant :
une unité de réception (101, 102) configurée pour recevoir des premières informations de véhicule, y compris des informations de position et des informations opérationnelles sur le véhicule cible (1), des secondes informations de véhicule, y compris des informations de position et des informations opérationnelles sur chacun des véhicules proches (2), et une vidéo enregistrée par une caméra (21) de chacun des véhicules proches (2) ;
une unité de calcul d'itinéraire (103) configurée pour obtenir un itinéraire pour le véhicule cible (1) sur la base des premières informations de véhicule ;
une unité de détermination d'informations d'entrée (104) configurée pour déterminer des informations d'assistance à la conduite sur la base d'au moins les premières informations de véhicule, les secondes informations de véhicule et l'itinéraire ;
une unité de transmission (108) configurée pour transmettre les informations d'assistance à la conduite déterminées par l'unité de détermination d'informations d'entrée (104) au véhicule cible (1), dans laquelle
l'unité de détermination d'informations d'entrée (104) sélectionne l'un quelconque des véhicules proches (2) situé à une position à laquelle une vidéo à utiliser pour l'assistance à la conduite peut être enregistrée, et détermine la vidéo acquise à partir du véhicule proche sélectionné (2) comme l'information d'assistance à la conduite ;
une unité d'identification d'objet (105) configurée pour identifier, sur la base de l'itinéraire et d'une vidéo acquise à partir de l'un quelconque des véhicules proches (2), un objet existant sur l'itinéraire ;
une unité de détermination de collision (106) configurée pour déterminer, sur la base des premières informations de véhicule, des secondes informations de véhicule, de la vidéo et de l'itinéraire, s'il existe ou non une possibilité de collision entre le véhicule cible (1) et l'objet, ainsi qu'un type de collision ; et
une unité de notification d'avertissement (107) configurée pour transmettre un message d'avertissement au véhicule cible (1) si l'unité de détermination de collision (106) détermine qu'il y a une possibilité d'une collision avec l'objet, dans laquelle
si l'unité de détermination de collision (106) détermine qu'il y a une possibilité d'une collision avec l'objet, l'unité de détermination d'informations d'entrée (104) effectue à nouveau la sélection sur la base du type de collision.

2. Le dispositif d'assistance à la conduite selon la revendication 1, dans lequel
l'unité de détermination d'informations d'entrée (104) comprend une unité de génération de groupe de véhicules (111) configurée pour générer, sur la base des premières informations de véhicule, des secondes informations de véhicule et de l'itinéraire, un groupe de véhicules (3) comprenant un ou plusieurs des véhicules proches (2) qui circulent devant ou derrière le véhicule cible (1, 1A), et
l'unité de détermination d'informations d'entrée (104) effectue la sélection parmi les véhicules proches (2) inclus dans le groupe de véhicules (3).

3. Le dispositif d'assistance à la conduite selon la revendication 2,
dans lequel
si l'unité de détermination de collision (106) détermine qu'il existe une possibilité d'une collision avec l'objet, l'unité de génération de groupe de véhicules (111) génère le groupe de véhicules (3) sur la base du type de collision.

4. Le dispositif d'assistance à la conduite selon la revendication 3, dans lequel, si l'objet n'existe pas dans la vidéo acquise à partir du véhicule proche (2) sélectionné, l'unité de détermination d'informations d'entrée (104) acquiert une vidéo avec l'objet existant dans celle-ci à partir d'un autre véhicule proche (2) inclus dans le groupe de véhicules (3), et détermine la vidéo avec l'objet existant dans celle-ci comme l'information d'assistance à la conduite.

5. Le dispositif d'assistance à la conduite selon l'une quelconque des revendications 1 à 4, dans lequel
l'unité de détermination d'informations d'entrée (104A) comprend :
une unité d'acquisition d'informations cartographiques (112) configurée pour acquérir des informations cartographiques comprenant l'itinéraire ; et
une unité de détermination de prévision (113) configurée pour prédire un changement dans l'itinéraire en raison d'un comportement de l'un quelconque des véhicules proches (2) et obtenir un nouvel itinéraire, sur la base de l'itinéraire, des informations cartographiques, des premières informations de véhicule et des secondes informations de véhicule, et
l'unité de détermination d'informations d'entrée (104A) effectue la sélection sur la base du nouvel itinéraire obtenu par l'unité de détermination de prévision (113).

6. Le dispositif d'assistance à la conduite selon la revendication 2, dans lequel
l'unité de détermination d'informations d'entrée (104A) comprend :
une unité d'acquisition d'informations cartographiques (112) configurée pour acquérir des informations cartographiques comprenant l'itinéraire ; et
une unité de détermination de prévision (113) configurée pour prédire un changement dans l'itinéraire en raison d'un comportement de l'un quelconque des véhicules proches (2) et obtenir un nouvel itinéraire, sur la base de l'itinéraire, des informations cartographiques, des premières informations de véhicule et des secondes informations de véhicule, et
l'unité de génération de groupe de véhicules (111) génère le groupe de véhicules (3) sur la base du nouvel itinéraire obtenu par l'unité de détermination de prévision (113) .

7. Le dispositif d'assistance à la conduite selon l'une quelconque des revendications 1 à 6, dans lequel
l'unité de détermination d'informations d'entrée (104B) comprend
une unité de détection d'événements spéciaux (114) configurée pour détecter un clignotement d'un avertisseur de danger et un arrêt soudain du véhicule proche (2) sur la base des secondes informations de véhicule, et
l'unité de détermination d'informations d'entrée (104B) effectue la sélection en excluant le véhicule proche (2) qui est détecté, par l'unité de détection d'événements spéciaux (114), comme ayant effectué un clignotement de l'avertisseur de danger ou un arrêt soudain.

8. Le dispositif d'assistance à la conduite selon la revendication 2, dans lequel
l'unité de détermination d'informations d'entrée (104B) comprend
une unité de détection d'événements spéciaux (114) configurée pour détecter un clignotement d'un avertisseur de danger et un arrêt soudain du véhicule proche (2) sur la base des secondes informations de véhicule, et
l'unité de génération de groupe de véhicules (111) génère le groupe de véhicules (3) excluant le véhicule proche (2) qui est détecté, par l'unité de détection d'événements spéciaux (114), comme ayant effectué un clignotement de l'avertisseur de danger ou un arrêt soudain.

9. Le dispositif d'assistance à la conduite selon l'une quelconque des revendications 1 à 8, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de forme d'itinéraire (117) configurée pour détecter, sur la base des informations cartographiques, de l'itinéraire et des premières informations de véhicule, toute quelconque parmi des formes spécifiques existant sur l'itinéraire et située devant le véhicule cible (1, 1A), dans laquelle
les formes spécifiques comprennent des formes d'une courbe, d'un point de bifurcation et d'une section à largeur de route modifiée sur l'itinéraire, et
si l'unité de détection de forme d'itinéraire (117) détecte la forme spécifique, l'unité de détermination d'informations d'entrée (104) effectue la sélection sur la base de la forme spécifique.

10. Le dispositif d'assistance à la conduite selon la revendication 2, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de forme d'itinéraire (117) configurée pour détecter, sur la base des informations cartographiques, de l'itinéraire et des premières informations de véhicule, toute quelconque parmi des formes spécifiques existant sur l'itinéraire et située devant le véhicule cible (1, 1A), dans laquelle
les formes spécifiques comprennent des formes d'une courbe, d'un point de bifurcation et d'une section à largeur de route modifiée sur l'itinéraire, et
si l'unité de détection de forme d'itinéraire (117) détecte la forme spécifique, l'unité de génération de groupe de véhicules (111) génère le groupe de véhicules (3) sur la base de la forme spécifique.

11. Le dispositif d'assistance à la conduite selon l'une quelconque des revendications 1 à 10, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de convergence (118) configurée pour détecter, sur la base des informations cartographiques, de l'itinéraire et des premières informations de véhicule, une direction de convergence et un point de convergence existant sur l'itinéraire et situés devant le véhicule cible (1, 1A), dans laquelle
si l'unité de détection de convergence (118) détecte le point de convergence, l'unité de détermination d'informations d'entrée (104) effectue la sélection sur la base de la direction de convergence et du point de convergence.

12. Le dispositif d'assistance à la conduite selon la revendication 2, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de convergence (118) configurée pour détecter, sur la base des informations cartographiques, de l'itinéraire et des premières informations de véhicule, une direction de convergence et un point de convergence existant sur l'itinéraire et situés devant le véhicule cible (1, 1A), dans laquelle
si l'unité de détection de convergence (118) détecte le point de convergence, l'unité de génération de groupe de véhicules (111) génère le groupe de véhicules (3) sur la base de la direction de convergence et du point de convergence.

13. Le dispositif d'assistance à la conduite selon l'une quelconque des revendications 1 à 12, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de voie (119) configurée pour détecter, sur la base des informations cartographiques, de l'itinéraire et des premières informations de véhicule, une voie (41) dans laquelle le véhicule cible (1, 1A) circule et une autre voie (43, 44) adjacente à la voie (41), dans laquelle
si l'unité de détection de voie (119) détecte l'autre voie (43, 44), l'unité de détermination d'informations d'entrée (104) effectue la sélection en excluant un véhicule proche (2) qui circule dans l'autre voie (43, 44) parmi les véhicules proches (2).

14. Le dispositif d'assistance à la conduite selon la revendication 2, comprenant en outre :
une parmi une unité de réception d'informations cartographiques (116) configurée pour recevoir de l'extérieur des informations cartographiques comprenant l'itinéraire et une unité de stockage d'informations cartographiques (115) configurée pour stocker les informations cartographiques, ou les deux ; et
une unité de détection de voie (119) configurée pour détecter, sur la base des informations cartographiques, de l'itinéraire et des premières informations de véhicule, une voie (41) dans laquelle le véhicule cible (1, 1A) circule et une autre voie (43, 44) adjacente à la voie (41), dans laquelle
si l'unité de détection de voie (119) détecte l'autre voie (43, 44), l'unité de génération de groupe de véhicules (111) génère le groupe de véhicules (3) excluant un véhicule proche (2) qui circule dans l'autre voie (43, 44) parmi les véhicules proches (2).

15. Le dispositif d'assistance à la conduite selon l'une quelconque des revendications 1 à 14, comprenant en outre
une unité de détection de véhicule proche (120) configurée pour détecter un autre véhicule proche (2) à une distance égale ou inférieure à une valeur seuil par rapport au véhicule proche (2) sélectionné par l'unité de détermination d'informations d'entrée (104), dans laquelle
si l'unité de détection de véhicule proche (120) détecte l'autre véhicule proche (2), l'unité de détermination d'informations d'entrée (104) effectue la sélection tout en incluant l'autre véhicule proche (2).

16. Le dispositif d'assistance à la conduite selon la revendication 2, comprenant en outre
une unité de détection de véhicule proche (120) configurée pour détecter un autre véhicule proche (2) à une distance égale ou inférieure à une valeur seuil par rapport au véhicule proche (2) sélectionné par l'unité de détermination d'informations d'entrée (104), dans laquelle
si l'unité de détection de véhicule proche (120) détecte l'autre véhicule proche (2), l'unité de génération de groupe de véhicules (111) génère le groupe de véhicules (3) comprenant l'autre véhicule proche (2).

17. Un système d'assistance à la conduite comprenant
un dispositif d'assistance à la conduite (100) selon l'une quelconque des revendications 1 à 16, dans lequel
le véhicule cible (1) comprend
une unité de transmission de premières informations de véhicule (11) configurée pour transmettre les premières informations de véhicule au dispositif d'assistance à la conduite (100), et
une unité de réception (13) configurée pour recevoir les informations d'assistance à la conduite déterminées par l'unité de détermination d'informations d'entrée (104), et
le véhicule proche (2) comprend
une unité de transmission de secondes informations de véhicule (23) configurée pour transmettre les secondes informations de véhicule au dispositif d'assistance à la conduite (100), et
une unité de transmission vidéo (22) configurée pour transmettre la vidéo enregistrée par la caméra (21) au dispositif d'assistance à la conduite (100).

18. Un procédé d'assistance à la conduite pour effectuer une assistance à la conduite sur un véhicule cible (1, 1A), le procédé d'assistance à la conduite comprenant :
une première étape d'acquisition de premières informations de véhicule, y compris des informations de position et des informations opérationnelles sur le véhicule cible (1, 1A), des secondes informations de véhicule, y compris des informations de position et des informations opérationnelles sur chacun des véhicules proches (2) circulant à proximité du véhicule cible (1, 1A), et une vidéo enregistrée par une caméra (21) de chacun des véhicules proches (2) ;
une deuxième étape consistant à obtenir un itinéraire pour le véhicule cible (1, 1A) sur la base des premières informations de véhicule ;
une troisième étape consistant à déterminer des informations d'assistance à la conduite sur la base d'au moins les premières informations de véhicule, les secondes informations de véhicule et l'itinéraire, dans laquelle
la troisième étape inclut une sélection de l'un quelconque des véhicules proches (2) situé à une position où une vidéo à utiliser pour l'assistance à la conduite peut être enregistrée, et une détermination de la vidéo acquise à partir du véhicule proche (2) sélectionné comme l'information d'assistance à la conduite ;
une quatrième étape consistant à identifier, sur la base de l'itinéraire et d'une vidéo acquise à partir de l'un quelconque des véhicules proches (2), un objet existant sur l'itinéraire ;
une cinquième étape consistant à déterminer, sur la base des premières informations de véhicule, des secondes informations de véhicule, de la vidéo et de l'itinéraire, s'il existe ou non une possibilité d'une collision entre le véhicule cible (1) et l'objet, ainsi qu'un type de collision ; et
une sixième étape consistant à transmettre un message d'avertissement au véhicule cible (1) s'il est déterminé, lors de la cinquième étape, qu'il existe une possibilité d'une collision avec l'objet, dans laquelle
s'il est déterminé qu'il existe une possibilité d'une collision avec l'objet, la sélection est à nouveau effectuée sur la base du type de collision.
